# EUROPEAN PATENT SPECIFICATION

(11) **EP 2 821 648 B1**
(45) Date of publication and mention of the grant of the patent: **26.12.2018**
(21) Application number: 13854215.4
(22) Date of filing: 06.03.2013
(51) Int. Cl.: F03D 15/00, F03D 9/28, F04B 1/04, F04B 1/047, F04B 1/053, F04B 17/02, F03C 1/00

(54) **HYDRAULIC MACHINE AND REGENERATIVE ENERGY POWER GENERATION DEVICE**
HYDRAULIKMASCHINE UND VORRICHTUNG ZUR ERZEUGUNG VON ERNEUERBARER ENERGIE
MACHINE HYDRAULIQUE ET DISPOSITIF DE GÉNÉRATION DE PUISSANCE À ÉNERGIE RÉCUPÉRÉE

(43) Date of publication of application: 07.01.2015
(73) Proprietor: Mitsubishi Heavy Industries, Ltd., Tokyo 108-8215 (JP)
(72) Inventor: OCHIAI, Hiroyasu, Tokyo 108-8215 (JP); SASAKI, Masashi, Tokyo 108-8215 (JP); DODSON, Henry, Midlothian Lothian EH20 9TB (GB)
(74) Representative: Intès, Didier Gérard André
(86) International application number: PCT/JP2013/056101
(87) International publication number: WO 2014/136214

(56) References cited:
- EP-A1- 0 607 069
- EP-A1- 2 821 638
- WO-A1-03/076799
- WO-A2-2011/104544
- DE-A1- 19 618 793
- DE-A1-102010 032 058
- DE-C1- 4 037 455
- GB-A- 2 482 879
- GB-A- 2 484 889
- JP-A- 2012 524 871
- JP-A- 2012 525 542
- JP-A- 2012 526 947
- US-A- 5 746 584
- US-A1- 2004 040 435

## Description

### [Technical Field]

The present invention relates to a hydraulic machine and a renewable energy power generating apparatus equipped with the same.

### [Background Art]

Conventionally known is a radial piston hydraulic machine having a plurality of pistons that is radially arranged.

For instance, disclosed in Patent Reference 1 is a radial piston hydraulic machine which functions as a drive train for a wind turbine generator. The radial piston hydraulic machine described in Patent Reference 1 is provided with a piston reciprocating in a cylinder, a roller rotatably attached to the piston and a cam having a cam surface formed by a plurality of lobes.

In addition, it is disclosed in Patent Reference 1 that a hydraulic chamber of the radial piston hydraulic machine is arranged with an inclination angle of approximately 10 degrees with respect to the radial direction.

### [Citation List]

### [Patent Reference]

[Patent Reference 1]

GB 2482879 A

WO 2011/104544 discloses a variable displacement radial piston fluid working machine. GB2484889 discloses a ring cam and fluid-working machine including ring cam. EP2821638 discloses a renewable energy generator and is a prior art as defined by Article 54(3) EPC.

### [Summary of Invention]

### [Technical Problem]

With a radial piston hydraulic machine, a side force in the direction orthogonal to the center axis of the cylinder act on the piston through the roller from the cam. As one way to reduce the side force, the piston can be arranged inclining with respect to the radial direction.

In this point, Patent Reference 1 teaches to arrange the hydraulic chamber of the radial piston hydraulic machine at an inclination angle of approximately 10 degrees with respect to the radial direction but fails to disclose how to determine the inclination angle of the working chamber.

An object of at least one embodiment of the present invention is to provide a hydraulic machine and a renewable energy power generating apparatus equipped with the same, whereby the effect of the side force can be mitigated.

### [Solution to Problem]

A radial piston hydraulic machine according to the present invention is defined in claim 1.

A side force of the load along the normal direction of the cam surface at the contact point with the roller acts on the piston of the hydraulic machine via the roller. The side force is a component in a direction orthogonal to the center axis of the cylinder. Depending on a contact position of the roller with respect to the cam surface, the normal direction of the cam surface at the contact position varies. Thus, the magnitude of the side force changes while the roller moves between the bottom point and the vertex point of the lobe. Therefore, between the bottom point and the vertex point of the lobe, a roller contact point where the side force becomes the maximum exists on the cam surface. The magnitude of the side force varies in the direction of the center axis of the cylinder as well.

For instance, if the cylinder does not incline with respect to the radial direction and the cylinder center axis is in parallel to the radial direction, when the roller is at the inflection point on the cam surface, the angle between the normal direction of the cam surface and the cylinder center axis becomes the largest and hence, an absolute value of the side force becomes the maximum. On the other hand, if the cylinder inclines with respect to the radial direction, the angle between the normal line and the cylinder center axis at the inflection point of the cam surface becomes small and hence, the side force decreases with the roller contacting the inflection point of the cam surface. By further increasing the inclination angle of the cylinder center axis with respect to the radial direction, the angle between the normal line of the cam surface and the cylinder center axis becomes the largest near the vertex point of the lobe and hence, the absolute value of the side force becomes the maximum near the vertex point of the lobe. In this manner, the magnitude of the side force and the roller contact position at which the absolute value of the side force becomes the maximum changes depending on the inclination angle of the cylinder center axis with respect to the radial direction.

In the above hydraulic machine, the relation of 0 < X < Y is satisfied, where X is an angle between the cylinder center axis and the first line in such a state that roller is in contact with the vertex point of the lobe, and Y is an angle between the normal line of the cam surface at an inflection point of the cam surface and the second line. The first line here is a line connecting a center of the at least one roller and a center of the cam in such a state that each of the at least one roller is in contact with the vertex point of the lobe. Further, the second line here is a line connecting the center of the cam and the inflection point on the cam surface. Specifically, the angle X corresponds to an angle between the center axis of each of the at least one cylinder with respect to the radial direction in such a state that each of the at least one roller is in contact with a vertex point of the lobe, and the angle Y corresponds to an angle between the center axis of each of the at least one cylinder with respect to the radial direction in such a state that each of the at least one roller is in contact with the inflection point of the cam surface. Thus, the cylinder inclines at an appropriate inclination angle with respect to the radial direction, and a peak value of the side force decreases. As a result, the effect of the side force can be mitigated.

In some embodiments, the hydraulic machine further comprises:
at least one hydrostatic pad disposed on a piston surface of each of the at least one piston to face each of the at least one cylinder, and
the hydraulic machine is a hydraulic pump which is configured to pressurize operating oil in a hydraulic chamber which is formed by each of the at least one cylinder and each of the at least one piston;
each of the at least one cylinder includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0.5Y < X < Y is satisfied; and
a relation of m ≥ n is satisfied, where m is the number of the hydrostatic pads in a first region disposed on an upstream side of the piston surface in the rotational direction of the cam and is an integer not less than 1, and n is the number of the hydrostatic pads in a second region disposed on a downstream side of the piston surface in the rotational direction of the cam and is an integer not less than 0.

In the case where the cylinder inclines with respect to the radial direction, the normal direction of the cam surface varies depending on a contact position of the roller against the cam surface. Therefore, between the bottom point and the vertex point of the lobe, a reference point Z_{ref} where the normal direction of the cam surface coincides with the cylinder center axis exists. At this reference point Z_{ref}, the normal direction of the cam surface coincides with the cylinder center axis and thus, the side force is not generated. The inclining directions of the normal lines of the cam surface with respect to the cylinder center axis on both sides of the reference point Z_{ref} on the cam surface, are opposite. Thus, if the opening-closing timing of the high pressure valve and the low pressure valve is appropriate, the direction of the side force is reversed at the reference point Z_{ref}. Specifically, while the roller moves between the bottom point and the vertex point of the lobe, the piston receives both the side force along the direction opposite to the rotational direction of the cam and the side force along the rotational direction of the cam.

The side force along the direction opposite to the rotational direction of the cam is mainly borne by m hydrostatic pads disposed in a first region which is on an upstream side of the piston surface in the rotational direction of the cam. On the other hand, the side force along the rotational direction of the cam is mainly born by n hydrostatic pads disposed in a second region which is on a downstream side of the piston surface in the rotational direction of the cam.

Here, in the case where the hydraulic machine is a hydraulic pump and a relation of 0.5Y < X < Y is satisfied where X is an angle between the cylinder center axis and the approximately radial direction (the first line) in such a state that the roller is in contact with the vertex point of the lobe and Y is an angle between the normal line at the inflection point on the cam surface and the radial direction (the second line), a peak value of the side force along the direction opposite to the rotational direction of the cam increases relatively. Therefore, by setting the number m of hydrostatic pads in the first region not smaller than the number n of the hydrostatic pads in the second region, the side force along the direction opposite to the rotational direction of the cam, which has relatively large peak value, can be effectively received by the m hydrostatic pads in the first region. On the other hand, the side force along the rotational direction of the cam, which has relatively small peak value, can be effectively received by the n hydrostatic pads in the second region.

Moreover, if the number of the hydrostatic pads is too large, the amount of the operating oil supplied to the hydrostatic pads (the amount of operating oil leaking from the hydraulic chamber in the structure where the operating oil in the hydraulic chambers is supplied to the hydrostatic pads) increases. This may be one of the causes of performance decline of the hydraulic pump. Therefore, by setting the number n of the hydrostatic pads in the second region not greater than the number m of the hydrostatic pads in the first region, the total number of the hydrostatic pads (=m+n) is reduced and hence, the performance decline of the hydraulic pump can be suppressed.

In some embodiments, the above hydraulic machine further comprises:
a plurality of hydrostatic pads disposed on a piston surface of each of the at least one piston to face each of the at least one cylinder, and
the hydraulic machine is a hydraulic pump which is configured to pressurize operating oil in a hydraulic chamber which is formed by each of the at least one cylinder and each of the at least one piston;
each of the at least one cylinder includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0.5Y < X < Y is satisfied; and
the hydrostatic pad in a first region disposed on an upstream side of the piston surface in the rotational direction of the cam has load capacity higher than load capacity of the hydrostatic pad in a second region disposed on a downstream side of the piston surface in the rotational direction.

By setting the load capacity of the hydrostatic pad in the first region higher than the load capacity of the hydrostatic pad in the second region, the side force along the direction opposite to the rotational direction of the cam, which has relatively large peak value, can be effectively received. On the other hand, the side force along the rotational direction of the cam, which has relative small peak value, can be received by the hydrostatic pads in the second region, which has relatively low load capacity.

Further, if the area of the hydrostatic pads is enhanced to improve the load capacity of the hydrostatic pads, the amount of the operating oil supplied to the hydrostatic pads (the amount of the operating oil leaking from the hydraulic chamber in the structure where the operating oil in the hydraulic chambers is supplied to the hydrostatic pads) increases. This may be one of the causes of performance decline of the hydraulic pump. Therefore, by setting the load capacity of the hydrostatic pads in the second region less than the load capacity of the hydrostatic pads in the first region, the total amount of the operating oil supplied to the hydrostatic pads in both the first region and the second region (the amount of the operating oil leaking from the hydraulic chamber) is reduced and hence, the performance decline of the hydraulic pump can be suppressed.

In some embodiments, the above hydraulic machine further comprises:
at least one hydrostatic pad disposed on a piston surface of each of the at least one piston to face each of the at least one cylinder, and
the hydraulic machine is a hydraulic pump which is configured to pressurize operating oil in a hydraulic chamber which is formed by each of the at least one cylinder and each of the at least one piston;
each of the at least one cylinder includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0 < X ≤ 0.5Y is satisfied; and
a relation of m ≤ n is satisfied, where m is the number of the hydrostatic pads in a first region on an upstream side of the piston surface in the rotational direction of the cam and is an integer not less than 1, and n is the number of the hydrostatic pads in a second region on a downstream side of the piston surface in the rotational direction of the cam and is an integer not less than 0.

In the case where the hydraulic machine is a hydraulic pump and a relation of 0 < X ≤ 0.5Y is satisfied where X is an angle between the cylinder center axis and the approximately radial direction (the first line) in such a state that the roller is in contact with the vertex point of the lobe and Y is an angle between the normal line at the inflection point on the cam surface and the radial direction (the second line), a peak value of the side force along the rotational direction of the cam increases relatively. Therefore, by setting the number n of the hydrostatic pads in the second region not smaller than the number m of the hydrostatic pads in the first region, the side force along the rotational direction of the cam, which has relatively large peak value, can be effectively received by the n hydrostatic pads in the second region. On the other hand, the side force along the direction opposite to the rotational direction of the cam, which has relatively small peak value, can be effectively received by the m hydrostatic pads in the first region where m is not greater than n.

Moreover, if the number of the hydrostatic pads is too large, the amount of the operating oil supplied to the hydrostatic pads (the amount of operating oil leaking from the hydraulic chamber in the structure where the operating oil in the hydraulic chambers is supplied to the hydrostatic pads) increases. This may be one of the causes of performance decline of the hydraulic pump. Therefore, by setting the number m of the hydrostatic pads in the first region not greater than the number n of the hydrostatic pads in the second region, the total number of the hydrostatic pads (=m+n) is reduced and hence, the performance decline of the hydraulic pump can be suppressed.

In some embodiments, the above hydraulic machine further comprises:
at least one hydrostatic pad disposed on a piston surface of each of the at least one piston to face each of the at least one cylinder, and
the hydraulic machine is a hydraulic pump which is configured to pressurize operating oil in a hydraulic chamber which is formed by each of the at least one cylinder and each of the at least one piston;
each of the at least one cylinder includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0 < X ≤ 0.5Y is satisfied; and
the hydrostatic pad in a first region disposed on an upstream side of the piston surface in the rotational direction of the cam has load capacity which is not higher than load capacity of the hydrostatic pad in a second region disposed on a downstream side of the piston surface in the rotational direction.

By setting the load capacity of the hydrostatic pad in the second region not less than the load capacity of the hydrostatic pad in the first region, the side force along the rotational direction of the cam, which has relatively large peak value, can be effectively received. On the other hand, the side force along the direction opposite to the rotational direction of the cam, which has relative small peak value, can be received by the hydrostatic pad in the first region, which has relatively low load capacity.

Further, if the area of the hydrostatic pads is enhanced to improve the load capacity of the hydrostatic pads, the amount of the operating oil supplied to the hydrostatic pads (the amount of the operating oil leaking from the hydraulic chamber in the structure where the operating oil in the hydraulic chambers is supplied to the hydrostatic pads) increases. This may be one of the causes of performance decline of the hydraulic pump. Therefore, by setting the load capacity of the hydrostatic pads in the first region not greater than the load capacity of the hydrostatic pads in the second region, the total amount of the operating oil supplied to the hydrostatic pads in both the first region and the second region (the amount of the operating oil leaking from the hydraulic chamber) is reduced and hence, the performance decline of the hydraulic pump can be suppressed.

In some embodiments, the above hydraulic machine further comprises:
a low pressure oil line where operating oil flows;
a high pressure oil line where the operating oil having pressure higher than in the low pressure oil line flows;
a low pressure valve disposed between the low pressure oil line and a hydraulic chamber formed by each of the at least one cylinder and each of the at least one piston;
a high pressure valve disposed between the hydraulic chamber and the high pressure oil line, and
the low pressure valve belonging to the at least one hydraulic chamber is configured to be kept closed at least in a part of a period in which each of the at least one roller travels from a first point to a second point on the cam surface and to open after each of the at least one roller travels through the second point, where the first point is a point nearer to the vertex point out of a pair of reference points on the cam surface at which the normal line of the cam surface meets the center axis of the cylinder between the bottom point and the vertex point of the lobe, and the second point is a point on the cam surface which corresponds to a top dead center of each of the at least one piston; and
the high pressure valve belonging to the at least one hydraulic chamber is configured to be kept open at least in a part of a period in which each of the at least one roller travels from the first point to the second point, and to close after each of the roller travels through the second point.

Here, the first point P₁ on the cam surface is one of the above described reference points Z_{ref}. Thus, at the first point P₁, the normal line of the cam surface coincides with the cylinder center axis, and the side force is not generated here. As the inclining directions of the normal lines of the cam surface with respect to the cylinder center axis on both sides of the first point are opposite, the direction of the side force is reversed at the first point.

As described above, at least in a part of a period in which the roller is between the first point P₁ and the second point P₂ corresponding to the top dead center of the piston, the low pressure valve is closed, and the high pressure valve is kept open. Once the roller passes through the second point, the low pressure valve is opened and the high pressure valve is closed so that the direction of the side force is reversed while the roller moves from the bottom point to near the vertex point of the lobe. Specifically, while the roller travels between the bottom point and the vertex point of the lobe, the piston receives both the side force along the direction opposite to the rotational direction of the cam and the side force along the rotational direction of the cam. However, the peak value of the side force along the rotational direction of the cam is reduced.

In this manner, by appropriately setting the opening-closing timing of the high pressure valve and the low pressure valve, it is possible to lower the peak value of the side force along the rotational direction of the cam while maintaining the length of the working region of the cam surface.

In one embodiment, the hydraulic machine is a hydraulic pump configured to pressurize the operating oil;
the low pressure valve is a normally-open electromagnetic valve which includes a first seat, a first valve element being contactable with the first seat, a first stem connected to the first valve element, a solenoid configured to generate a magnetic force for driving the first stem, and a first energizing member for energizing the first valve element to an opposite side of the first seat;
the normally-open electromagnetic valve belonging to the at least one hydraulic chamber is configured:
when each of the at least one roller is positioned near a third point on the cam surface which corresponds to a bottom dead center of each of the at least one piston, to close as the solenoid is energized;
when each of the at least one roller travels from the third point through the first point to the second point, to stay closed;
when each of the at least one roller reaches a fourth point which is disposed on an opposite side of the second point from the first point, to open as an energizing force by the first energizing member exceeds differential pressure of the operating oil between both sides of the first valve element; and
when each of the at least one roller travels from the fourth point to the third point, to stay open;
the high pressure valve is a check valve including a second seat, a second valve element engageable with the second seat and a second energizing member for energizing the second element to a second seat side; and
the check valve is configured to open as an energizing force by the second energizing member exceeds differential pressure of the operating oil between both sides of the second valve element after each of the at least one roller travels through the third point, and to close as the differential pressure decreases below the energizing force before each of the at least one roller reaches the fourth point.

Moreover, a lubricant supply condition for supplying lubricating oil to a piston surface of the piston to face each of the at least one cylinder may be determined based on change in a lubrication state of the piston surface before and after each of the at least one roller travels through the first point.

(cancelled)

In one embodiment, each of the at least one cylinder inclines with respect to the radial direction such that a relation of 0.8×F₂ ≤ F₁ ≤ 1.2×F₂ is satisfied, where F₁ is a maximum value of a side force along a rotational direction of the cam and F₂ is a maximum value of the side force along a direction opposite to the rotational direction of the cam.

As a result, the maximum value F₁ of the side force acting along the rotational direction of the cam and the maximum value F₂ of the side force acting in the direction opposite to the rotational direction of the cam are both reduced with balance, and the effect of the side force can be effectively mitigated.

A renewable energy power generating apparatus according to at least one embodiment of the present invention comprises:
at least one blade for receiving renewable energy;
a hub on which the at least one blade is mounted;
a hydraulic pump configured to be driven by rotation of the hub;
a hydraulic motor configured to be driven by pressure oil generated by the hydraulic pump; and
a generator configured to be driven by the hydraulic motor, and
at least one of the hydraulic pump or the hydraulic motor is a radial piston hydraulic machine;
the radial piston hydraulic machine comprises: at least one cylinder; at least one piston provided reciprocably in the at least one cylinder; a cam having a cam surface formed by a plurality of lobes arranged along a circumferential direction of the hydraulic machine and being configured rotatably so that the plurality of lobes moves relative to each of the at least one piston in the circumferential direction; and at least one roller rotatably engaging with the at least one piston, respectively and contacting the cam surface; and
each of the at least one cylinder is arranged inclining with respect to the radial direction of the hydraulic machine to satisfy a relation of 0 < X < Y, where X is an angle between a center axis of each of the at least one cylinder and a first line connecting a center of said each of the at least one roller and the center of the cam in such a state that each of the at least one roller is in contact with a vertex point of the lobe, and Y is an angle between a normal line of the cam surface at an inflection point of the cam surface between a bottom point and the vertex point of the lobe and a second line connecting the center of the cam and the inflection point.

In the above renewable energy power generating apparatus, the relation of 0 < X < Y is satisfied, where X is an angle between the cylinder center axis and the approximately radial direction (the first line) in such a state that roller is in contact with the vertex point of the lobe, and Y is an angle between the normal line of the cam surface at an inflection point of the cam surface and the radial direction (the second line). Thus, the cylinder inclines at an appropriate inclination angle with respect to the radial direction, and a peak value of the side force decreases. As a result, the effect of the side force can be mitigated.

In one embodiment, the renewable energy power generating apparatus is a wind turbine generator configured to generate electric power from wind in a form of the renewable energy.

### [Effects of the invention]

According to at least one embodiment of the present invention, the cylinder inclines at an appropriate inclination angle with respect to the radial direction, and a peak value of the side force decreases. As a result, the effect of the side force can be mitigated.

### [Brief Description of Drawings]

FIG. 1 is an illustration of a wind turbine generator according to one embodiment.
FIG. 2 is a sectional view along a radial direction of the hydraulic machine according to one embodiment.
FIG. 3 is a sectional view illustrating a peripheral structure of a cylinder of the hydraulic machine according to one embodiment.
FIG. 4 is an illustration for explaining the principle of generation of side force.
FIG. 5 (a) - (c) are graphs showing calculation results of side force Fs under three conditions with different inclination angles of the cylinder center axis with respect to the radial direction of the hydraulic machine.
FIG.6 is an illustration for explaining how to set the inclination angle of the cylinder center axis with respect to the radial direction according to one embodiment.
FIG. 7 is an oblique view of a peripheral structure of the piston according to one embodiment of the present invention.
FIG. 8(a) and (b) are views of a configuration of a hydrostatic pad according to one embodiment.
FIG. 9 is a chart showing an opening-closing timing of a low pressure valve and a high pressure valve according to one embodiment.

### [Description of Embodiments]

Preferred embodiments of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In the following embodiments, a wind turbine generator is described as one example of a renewable energy power generating apparatus. However, the present invention is also applicable to other renewable energy power generating apparatuses, such as a current power generator, an ocean current power generator, and a river current power generator.

Moreover, although the embodiments of the hydraulic machine mainly equipped with an outward cam are explained below, the hydraulic machine may be equipped with an inward cam. In such case, embodiments of the present invention may include the case where the description regarding the directions in the following contents is reversed.

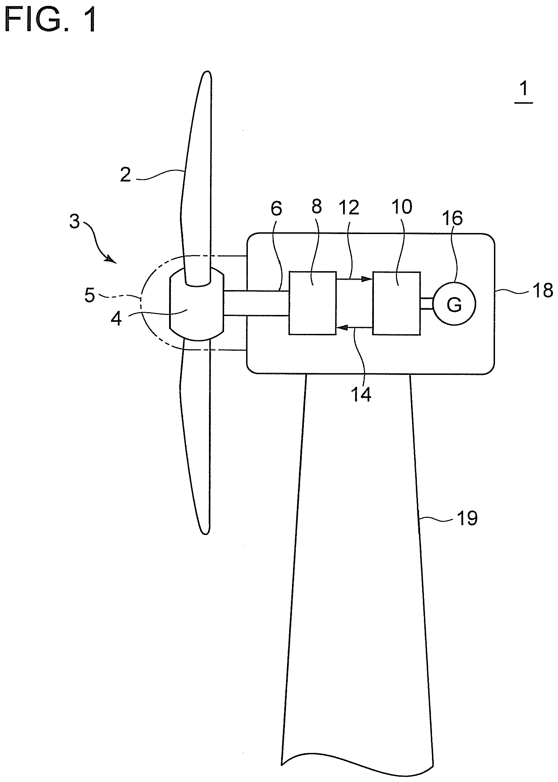

FIG. 1 illustrates a wind turbine generator according to one embodiment. As shown in this drawing, a wind turbine generator 1 is equipped with a rotor 3 formed by of at least one blade 2 and a hub 4. Further, the hub 4 may be covered by a hub cover (spinner) 5.

In one embodiment, the hydraulic pump 8 is connected with the rotor 3 through a rotation shaft 6. A hydraulic motor 10 is connected to the hydraulic pump 8 through a high pressure oil line 12 and a low pressure oil line14. Specifically, an outlet of the hydraulic pump 8 is connected to an inlet of the hydraulic motor 10 through the high pressure oil line 12, and an inlet of the hydraulic pump 8 is connected to an outlet of the hydraulic motor 10 through the low pressure oil line14. The hydraulic pump 8 is driven by the rotation shaft 6 to pressurize operating oil, thereby generating high-pressure operating oil (pressure oil). The pressure oil generated by the hydraulic pump 8 is supplied to the hydraulic motor 10 through the high pressure oil line 12 so as to drive the hydraulic motor 10 by this pressure oil. The low pressure operating oil after performing work in the hydraulic motor 10 is again returned to the hydraulic pump 8 via the low pressure oil line14 disposed between the outlet of the hydraulic motor 10 and the inlet of the hydraulic pump 8.

A generator 16 is connected to the hydraulic motor 10. In one embodiment, the generator 16 is a synchronous generator which is connected to the grid and is driven by the hydraulic motor 10.

Further, the rotation shaft 6 is at least in part covered by a nacelle 18 installed on a tower 19. In one embodiment, the hydraulic pump 8, the hydraulic motor 10, and a generator 16 are installed inside the nacelle 18.

In some embodiments, at least one of the hydraulic pump 8 or the hydraulic motor 10 is a radial piston hydraulic machine which is described below.

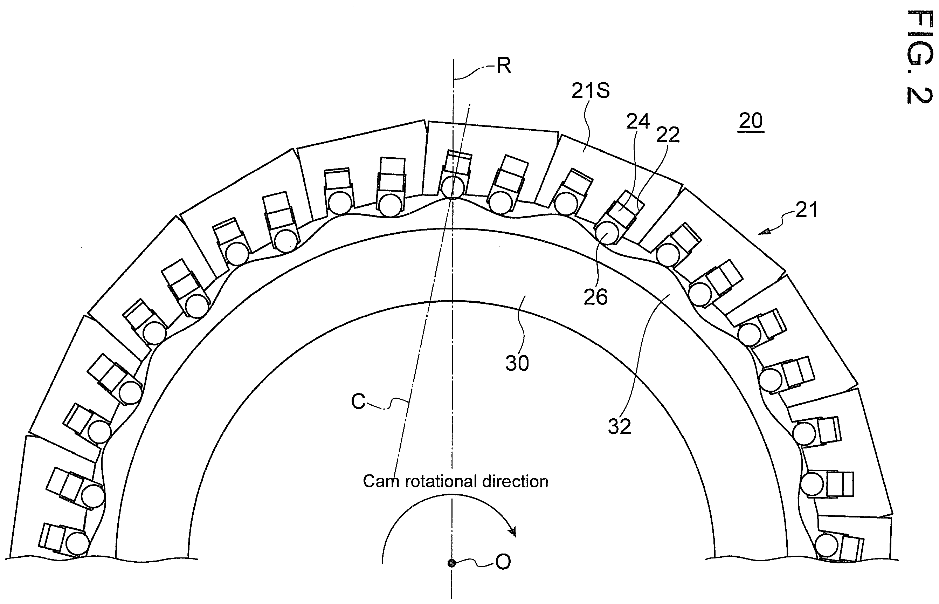

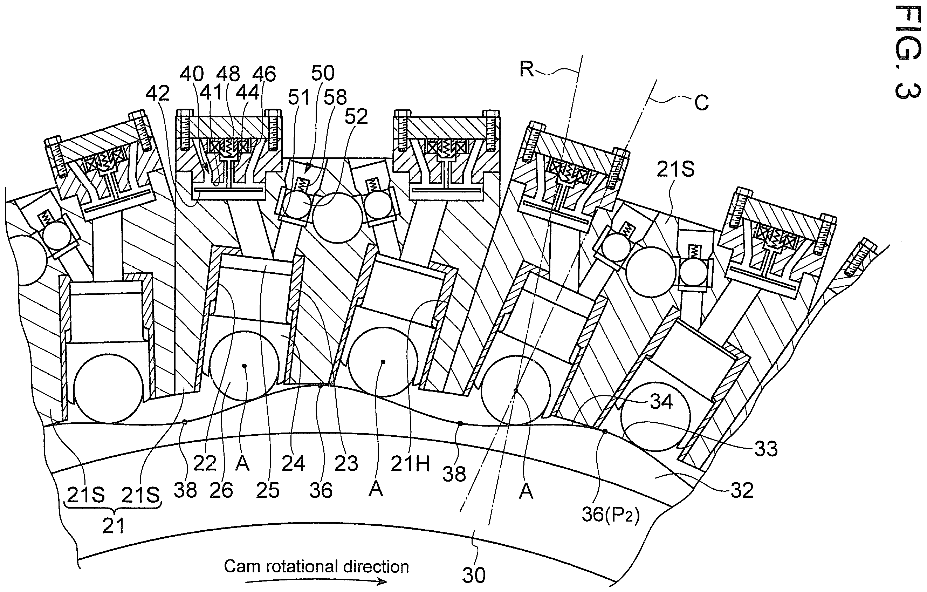

FIG. 2 is a sectional view taken along a radial direction of the hydraulic machine according to one embodiment. FIG. 3 is a sectional view of a peripheral structure of a cylinder of the hydraulic machine according to one embodiment.

A hydraulic machine 20 shown in FIG. 2 is provided with a plurality of cylinders 22, a plurality of pistons 24 disposed respectively in the plurality of cylinders 22, and a plurality of rollers 26 disposed respectively in the plurality of pistons 24. Moreover, the hydraulic machine 20 is further provided with a rotation shaft 30 and a cam 32 which is configured to be rotated with the rotation shaft 30 and the rotation shaft 30.

In the embodiments illustrated in FIG. 2 and FIG. 3, an annular outward cam 32 is disposed on an outer circumferential side of the rotation shaft 30, and the cylinders 22, the pistons 24, and the rollers 26 are disposed on an outer circumferential side of the outward cam 32. Here, the outward cam indicates the cam which has a cam surface contacting the rollers 26 on the outer circumferential side. In another embodiment, an annular inward cam 32 is disposed on an inner circumferential side of the rotation shaft 30, and the cylinders 22, the pistons 24, and the rollers 26 are disposed on an inner circumferential side of the inner sense cam 32. Here, the inward cam indicates the cam which has a cam surface contacting the rollers 26 on the inner circumferential side.

The cylinders 22 are arranged in the circumferential direction of the hydraulic machine 20 inside a cylinder block 21. In one embodiment, as shown in FIG. 3, the cylinder 22 is formed of a cylinder sleeve 23 inserted in a sleeve hole 21H of the cylinder block 21. In another embodiment, the cylinder 22 is directly formed in the cylinder block 21 without using the cylinder sleeve 23. Further, the cylinder block 21 may be divided into a plurality of segments 21S in the circumferential direction of the hydraulic machine 20. In the embodiments illustrated in FIG. 2 and FIG. 3, the segments 21S each of which has a pair of the cylinders 22 are arranged in the circumferential direction of the hydraulic machine 20, and the annular cylinder block 21 is formed by these segment 21S.

Each of the cylinders 22 is arranged inclining with respect to a radial direction R of the hydraulic machine 20, and a center axis C of the cylinder 22 inclines to the radial direction R of the hydraulic machine 20. In one embodiment, the hydraulic machine 20 is a hydraulic pump, and as shown in FIG. 2 and FIG. 3,

The cylinder includes one end (a first end) which is farther from the cam 32 and other end (a second end) which is nearer to the cam 32, and the cylinder 22 inclines with respect to the radial direction R such that a circumferential position of the one end is displaced downstream in a rotational direction of the cam 32 from a circumferential position of the other end. In contrast, in the case where the hydraulic machine 20 is the hydraulic motor, the cylinder 22 inclines with respect to the radial direction R such that the circumferential position of the one end which is farther from the cam 32 is displaced upstream in the rotational direction of the cam 32 from the circumferential position of the other end which is nearer to the cam 32.

The inclination angle of the center axis C of the cylinder 22 with respect to the radial direction R is described later in detail.

Each of the pistons 24 is arranged slidably in each of the cylinders 22. Each of the pistons 24 is guided by each of the cylinders22 to reciprocate between a bottom dead center and a top dead center along the center axis C of a cylinder 22. The volume of a hydraulic chamber 25 surrounded at each of the cylinders22 and each of the pistons 24 changes periodically as a result of the reciprocating motion of the piston 24.

As for this reciprocating motion of the piston 24 accompanied by a periodic volume change of the hydraulic chamber 25, a motion mode is changed between the reciprocating motion of the piston 24 and a rotary motion of the cam 32.

For example, when the hydraulic machine 20 is the hydraulic pump 8, the rotary motion of the cam 32 rotated with the rotation shaft 30 of the hydraulic machine 20 is transformed into the reciprocating motion of the piston 24, thereby causing a periodic volume change of the hydraulic chamber 25, and hence the high-pressure operating oil (pressure oil) is generated in the hydraulic chamber 25. On the other hand, when the hydraulic machine 20 is the hydraulic motor 10, the pressure oil is introduced into the hydraulic chamber 25, thereby causing the reciprocating motion of the piston 24, and then this reciprocating motion is transformed into the rotary motion of the cam 32. As a result, the rotation shaft 30 of the hydraulic machine 20 rotates with the cam 32.

In this manner, energy is converted, by work of the cam 32, between rotation energy (mechanical energy) of the rotation shaft 30 of the hydraulic machine 20 and fluid energy of the operating oil. Thus, the hydraulic machine 20 can serve an expected role of the hydraulic pump 8 or a hydraulic motor 10.

Each of the rollers 26 is engaging with each of the pistons 24 to be rotatable around a rotation axis A of the roller 26. The roller 26 is in contact with the cam surface 33 of the cam 32. When the cam 32 rotates with the rotation shaft 30 around a cam center O (the center axis of the hydraulic machine 20), each of the rollers 26 travels on the cam surface 33 of the cam 32 while rotating around the rotation center A of the roller 26.

The cam surface 33 of the cam 32 is formed by two or more lobes 34 aligned along the circumferential direction of the hydraulic machine 20. Each of the lobes 34 projects toward the cylinder 22. Each of the lobes 34 is formed of a smooth curve passing through one pair of bottom points 38 and one vertex point 36 located between the pair of bottom points 38. The vertex point 36 and bottom points 38 of the lobe 34 are locations on the cam surface 33 where the distance from the center axis (cam center) O of the hydraulic machine 20 is the maximum or the minimum, and the vertex point 36 is located nearer to the cylinder 22 than the bottom point 38. The vertex point36 of the lobe 34 coincides with a point on the cam surface 33 corresponding to the top dead center of a reciprocating motion cycle of the piston 24 (hereinafter referred to as a second point P₂). On the other hand, the bottom point 38 of the lobe 34 coincides with a point on the cam surface 33 corresponding to the bottom dead center in a reciprocating motion cycle of the piston 24 (hereinafter referred to as a third point P₃).

In an exemplary embodiment shown illustrated in FIG. 2 and FIG. 3, the cylinder 22 is arranged on an outer the circumferential side of the outward cam 32, the distance from the center axis O of the outward cam 32 is the maximum at the vertex point 36 of the lobe 34, and the distance from the center axis O is the minimum at the bottom point 38 of the lobe 34. On the other hand, in another embodiment where the cylinders are arranged on the inner circumferential side of the inward cam, the distance from the center axis O of the inward cam to the cam surface 33 is the minimum at the vertex point 36 of the lobe 34, and the distance from the center axis O of the inward cam to the cam surface 33 is the maximum at the bottom point 38 of the lobe 34. In addition, at the vertex point 36 and the bottom point 38 of each of the lobes 34, the normal line of the cam surface 33 coincides with the radial direction R.

In some embodiments, as shown in FIG. 3, the hydraulic machine 20 is further provided with a low-pressure valve 40 disposed between each of the hydraulic chambers 25 and the low pressure oil line 14, and a high pressure valve 50 disposed between each of the hydraulic chambers 25 and the high pressure oil line 12. In the case where the hydraulic machine 20 is a hydraulic pump, the low-pressure valve 40 serves to supply low-pressure operating oil to the hydraulic chamber 25 from the low pressure oil line14, and a high pressure valve 50 serves to supply high-pressure operating oil generated in the hydraulic chamber 25 to the high-pressure line 12.

The low pressure valve 40, as illustrated in FIG. 2, is a normally-open electromagnetic valve which includes a first seat 41, a first valve element 42 being contactable with the first seat 41, a first stem 44 connected to the first valve element 42, a solenoid 46 configured to generate a magnetic force for driving the first stem 44, and a first energizing member 48 for energizing the first valve element 42 to an opposite side of the first seat 41. In such case, when the solenoid 46 is excited, the magnetic force by the solenoid 46 moves the first stem 44 against the energizing force by the first energizing member 48 and then, the first valve element 42 comes in contact with the first seat 41, thereby closing the low pressure valve 40. Further, when the solenoid 46 is de-excited, the energizing force by the first energizing member 48 moves the first step 44 to move the first valve element 42 away from the first seat 41, thereby opening the low pressure valve 40. Further, the first valve element 42 may be a face sealing poppet valve element.

In contrast, in the case where the hydraulic machine 20 is a hydraulic pump, the high pressure valves 50 may be, as illustrated in FIG. 3, a check valve including a second seat 51, a second valve element 52 engageable with the second seat 51 and a second energizing member 58 for energizing the second element 52 to a second seat side 51. In such case, when the pressure in the hydraulic chamber 25 rises and the differential pressure of the both sides of the second valve element 52 exceeds the energizing force by the second energizing member 58, the second valve element 52 moves away from the second sheet 51, thereby opening the high pressure valve 50 by this differential pressure. Further, if the differential pressure of the both sides of the second valve element 52 is smaller than the energizing force by the second energizing member 58, the energizing force by the second energizing member 58 moves the second element 52 and the second element 52 comes in contact with the second sheet 51, thereby closing the high pressure valve 50. The second valve element 52 may be a spherical valve element as shown in FIG. 3.

The opening-closing timing of the low-pressure valve 40 and the high pressure valve 50 is explained later in detail.

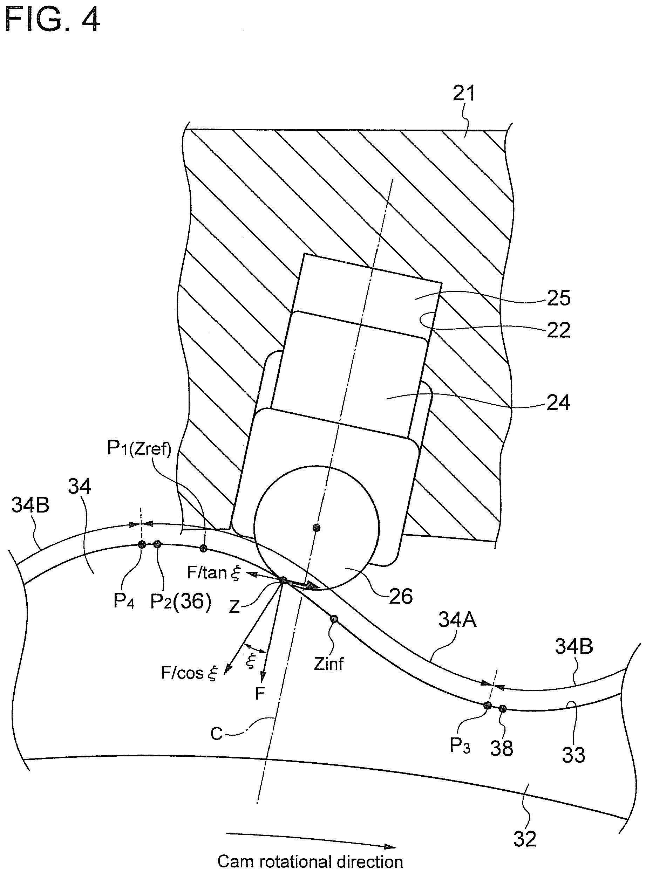

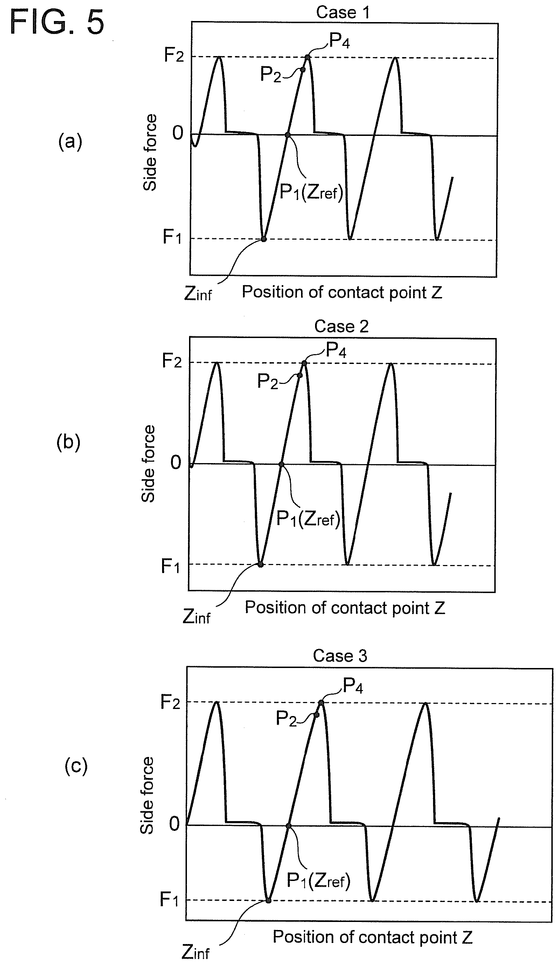

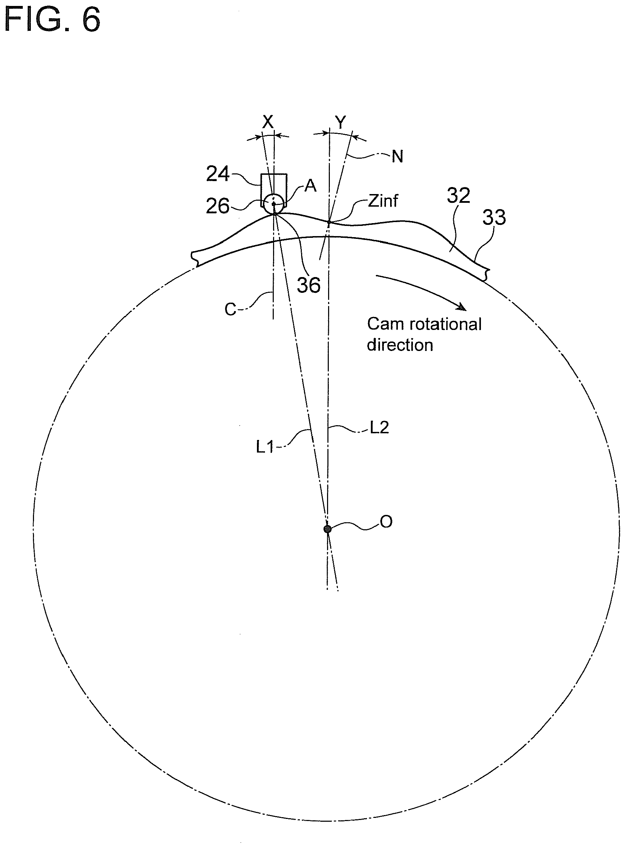

FIG. 4 is an illustration for explaining the principle of generation of the side force. FIG. 5 (a) - (c) are graphs showing calculation results of side force Fs under three conditions with different inclination angles of the cylinder center axis C with respect to the radial direction R. FIG.6 is an illustration for explaining how to set the inclination angle of the cylinder center axis C with respect to the radial direction R according to one embodiment.

In the case where the hydraulic machine 20 is a hydraulic pump, when the roller 26 is on a working region 34A of the cam surface 33, the piston 24 is fundamentally traveling toward the top dead center from the bottom dead center, and the pressure of the operating oil in the hydraulic chamber 25 is high. In contrast, when the roller 26 is on a breathing region 34B of the cam surface 33, the piston 24 is fundamentally traveling toward the bottom dead center from the top dead center, and the pressure of the operating oil in the hydraulic chamber 25 is low. In the case where the hydraulic machine 20 is a hydraulic pump, as illustrated in FIG.4, fundamentally the working region 34A is on a downstream region of each of the lobe 34 which is downstream from the vertex point 36 in the rotational direction of the cam, and the breathing region 34B is on an upstream region of each of the lobe 34, which is upstream from the vertex point 36 in the rotational direction of the cam.

On the other hand, in the case where the hydraulic machine 20 is a hydraulic motor, when the roller 26 is on the working region 34A of the cam surface 33, the piston 24 is fundamentally traveling toward the bottom dead center from the top dead center, and the pressure of the operating oil in the hydraulic chamber 25 is high. In contrast, when the roller 26 is on the breathing region 34B of the cam surface 33, the piston 24 is fundamentally traveling toward the top dead center from the bottom dead center, and the pressure of the operating oil in the hydraulic chamber 25 is low. In the case where the hydraulic machine 20 is a hydraulic motor, fundamentally the working region 34A is on an upstream region of each of the lobe 34 which is upstream from the vertex point 36 in the rotational direction of the cam, and the breathing region 34B is on a downstream region of each of the lobe 34, which is downstream from the vertex point 36 in the rotational direction of the cam.

For example, with a typical hydraulic pump 8 used for a renewable energy power generating apparatus represented by the wind turbine generator 1, the pressure of operating oil in the hydraulic chamber 25 in the period when the roller 26 is on the breathing region 34B is 300-400bar, whereas the pressure of operating oil in the hydraulic chamber 25 in the period when the roller 26 is on the working region 34 is few bar. There is a big difference between these two cases.

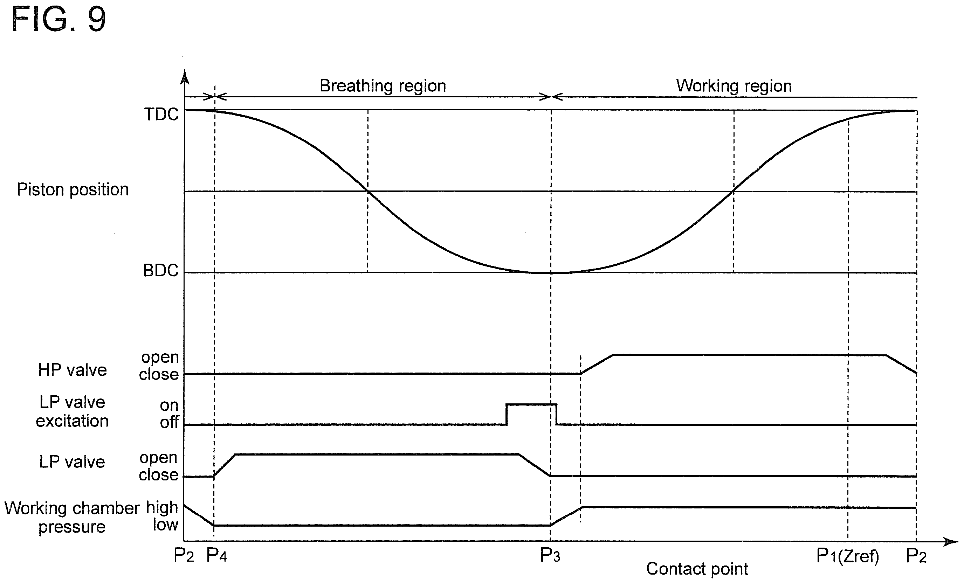

A shifting point between the working domain 34A and the breathing region 34B (a third point P₃ and a fourth point P₄ that are described later in reference to FIG. 9) may vary with the inclination angle of the center axis C of the cylinder to the radial direction R, the opening-closing timing of the low-pressure valve 40 and the high pressure valve 50, the configuration of the cam 32 and the roller 26, etc.

Typically, the shifting points P₃ and P₄ between the working region 34A and the breathing region 34B are set at or near the positions on the cam surface 33 corresponding to the top dead center and the bottom dead center of the piston 24 (the vertex point 36 and the bottom point 38 of the lobe 34). In one embodiment, in the case where the hydraulic machine 20 is a hydraulic pump, as shown in FIG. 4, a starting point P₃ of the working region 34A is set as a position which is slightly shifted downstream in the rotational direction of the cam from the position on the cam surface 33 corresponding to the bottom dead center of the piston 24 (the bottom point 38 of the lobe 34), and a starting point P₄ of the working region 34A is set as a position which is slightly shifted upstream in the rotational direction of the cam from the position on the cam surface 33 corresponding to the top dead center of the piston 24 (the vertex point 38 of the lobe 34). Specifically, immediately after the roller 26 travels through the bottom point 38 of the lobe 34, the roller 26 reaches the shifting point P₃ to end the breathing stroke of the hydraulic chamber (an intake stroke, and then the working stoke (an exhaust stoke) of the hydraulic chamber 25 starts. Moreover, immediately after the roller 26 travels through the vertex point36 of the lobe 34, the roller 26 reaches the shifting point P₄ to end the working process of the hydraulic chamber 25, and the breathing stroke of the hydraulic chamber 25 starts.

In the period when the roller 26 is on the working region 34A, load F/cosξ along the normal direction of the cam surface 33 acts on a contact point Z with the roller 26 on the cam surface 33, where F is a resultant force of an inertia force and a press force acting along the center axis C of the cylinder 22 and resulting from a significantly high pressure in the hydraulic chamber 25. The component in the direction orthogonal to the center axis C of the cylinder 22 among this load F/cosξ, is F×tanξ, and the side force Fs as the reaction force acts on the piston 24 from the cam 32 through the roller 26.

In the period when the roller 26 is on the breathing region 34A, the pressure in the hydraulic chamber 25 is low and thus, the side force Fs is substantially small enough to be disregarded. Therefore, in this specification, the configurations to reduce the effect of the side force Fs which is generated during the period when the roller 26 on the working region 34A is mainly described.

Since the cam surface 33 is a curve surface passing through the bottom points 38 and the vertex point 36, where the diameter of the cam 32 is the largest and the smallest, the normal direction of the cam surface 33 is different at every contact point X with the roller 26 on the cam surface 33. This means that the magnitude of the side force Fs changes while the roller 26 travels between the bottom point 38 and the vertex point 36 of the lobe 34. Therefore, the contact point on the cam surface 33 where the side force Fs becomes the maximum exists between the bottom point 38 and the vertex point 36 of the lobe.

For example, if the cylinder 22 is not inclined to the radial direction R and the center axis C of the cylinder 22 is in parallel to the radial direction R, when the roller 26 contacts the inflection point Z_{inf} on the working region 34A of the cam surface 33, the angle ξ between the normal direction of the cam surface 33 and the center axis C of the cylinder 22 becomes the maximum and hence, an absolute value of the side force Fs becomes the maximum.

However, since the side force Fs (= F×tanξ) is a function of the angle ξ between the normal direction of the cam surface 33 at the contact point Z and the center axis C of the cylinder 22, the side force Fs changes according to the direction of the center axis C of the cylinder 22. Therefore, if the center axis C of the cylinder 22 inclines with respect to the radial direction R, the angle ξ between the normal line and the cylinder center axis at the inflection point Z_{inf} of the cam surface 33 becomes small and hence, the side force Fs in such a state that the roller 26 is in contact with the inflection point Z_{inf} of the cam surface 33 decreases. By further increasing the inclination angle of the cylinder center axis C with respect to the radial direction R, the angle ξ between the normal line of the cam surface 33 and the cylinder center axis C becomes large near the vertex point 36 of the lobe 34 and hence, the absolute value of the side force Fs becomes the maximum near the vertex point 36.

In this manner, the magnitude of the side force Fs and the contact point where the absolute value of the side force Fs becomes the maximum changes depending on the inclination angle of the cylinder center axis C with respect to the radial direction R.

FIG. 5 (a) shows a calculation result of the side force Fs in Case 1 where the inclination angle of the cylinder center axis C to the radial direction R is the smallest. FIG. 5 (b) shows a calculation result of the side force Fs in Case 2 where the inclination angle of the cylinder center axis C to the radial direction R is medium. FIG. 5 (c) shows a calculation result of the side force Fs in Case 3 where the inclination angle of the cylinder center axis C to the radial direction R is the largest.

In FIG. 5 (a) - (c), the horizontal axis represents a position of the contact point Z on the cam surface 33, and the vertical axis represents the magnitude of the side force Fs. Moreover, in FIG.5 (a) - (c), the side force Fs along the rotational direction of the cam is shown as a negative value, and the side force Fs along the direction opposite to the rotational direction of the cam is shown as a positive value.

The normal direction of the cam surface 33 varies depending on the location of the contact point Z of the roller 26 on the cam surface 33. Therefore, as shown in FIG. 5 (a) - (c), during the period when the roller 26 is located on the working region 34A of the cam surface 33, the side force Fs (= F×tanξ), which is a function of the angle ξ between the normal direction of the cam surface 33 and the cylinder center axis C, changes significantly in a cyclical manner with the movement of the roller 26 on the cam surface 33. Since the pressure in the period when the roller 26 is located on the breathing region 34B on the cam surface 33, the pressure in the hydraulic chamber 25 is small and thus, the side force Fs is substantially zero and there is no significant change.

Moreover, between the bottom point 38 and the vertex point 36 of the lobe 34 on the working region 34A, a reference point Z_{ref} (first point P₁) where the normal direction of the cam surface 33 coincides with the cylinder center axis C exists. At this reference point Z_{ref} (first point P₁), the normal direction of the cam surface 33 coincides with the cylinder center axis C and thus, the side force Fs is not generated. Further, the inclining directions of the normal lines of the cam surface 33 with respect to the cylinder center axis C on both sides of the reference point Z_{ref} on the cam surface 33 are opposite to each other. Thus, if the opening-closing timing of the high pressure valve 50 and the low pressure valve 40 is appropriate, the direction of the side force is reversed at the reference point Z_{ref}. Therefore, in FIG. 5 (a) - (c), the sign of the side force Fs changes from negative to positive before and after the reference point Z_{ref}.

In addition, in the examples illustrated in FIG. 5 (a) - (c), although it seems that there is only one reference point Z_{ref} disposed between the inflection point Z_{inf} and the vertex point 36 of the lobe 34, the reference point Z_{ref} where the normal direction of the cam surface 33 coincides with the cylinder center axis C also exists between the bottom point 38 of the lobe 34 and the inflection point Z_{inf}. However, in the examples illustrated in FIG.5 (a) - (c), since the reference point Z_{ref} disposed closer to this bottom point 38 is included in the breathing region 34B, it does not stand out.

Thus, while the roller 26 moves between the bottom point 38 and the vertex point 36 of the lobe 34, the piston 24 receives both the side force Fs of the positive sign along the direction opposite to the rotational direction of the cam and the side force Fs of the negative sign along the rotational direction of the cam.

In any of the cases illustrated in FIG. 5 (a) - (c), the peak value F₁ of the side force of a negative sign exists at the inflection point Z_{inf}. On the other hand, the peak value F₂ of the side force of a plus sign appears near the vertex point 36 (the second point P₂) of the lobe 34.

As seen in FIG.5 (a) - (c), as the inclination angle of the cylinder center axis C with respect to the radial direction R becomes larger, the peak value F₁ of the side force of the negative sign along the rotational direction of the cam becomes small, and the peak value F₂ of the side force of the plus sign along the direction opposite to the rotation al direction of the cam becomes large. This is because with larger inclination of the of the cylinder center axis C to the radial direction R, the angle ξ between the normal direction of the cam surface 33 and the cylinder center axis C in the inflection point Z_{inf} becomes small, whereas the angle ξ becomes larger near the vertex point 36 of the lobe 34.

In one embodiment, each of the cylinders 22 inclines with respect to the radial direction R such that a relation of 0.8×F₂ ≤ F₁ ≤ 1.2×F₂ is satisfied, where F₁ is a maximum value of a side force along a rotational direction of the cam 32 and F₂ is a maximum value of the side force along a direction opposite to the rotational direction of the cam 32.

As a result, the maximum value F₁ of the side force acting along the rotational direction of the cam and the maximum value F₂ of the side force acting in the direction opposite to the rotational direction of the cam 32 are both reduced with balance, and the effect of the side force can be effectively mitigated.

In some embodiments, as illustrated in FIG.6, each of the cylinders 22 inclines with respect to the radial direction R such that the relation of 0 < X < Y is satisfied, where X is an angle between the cylinder center axis C and the first line L in such a state that roller 26 is in contact with the vertex point 36 of the lobe 34, and Y is an angle between the normal line N of the cam surface 33 at the inflection point Z_{inf} of the cam surface 33 and the second line L2. Thus, the cylinder 22 inclines at an appropriate inclination angle with respect to the radial direction R, and the peak values F₁, F₂ of the side force Fs decreases. As a result, the effect of the side force Fs can be mitigated.

The first line here L1 is a line connecting a roller center axis A and a cam center O in such a state that the roller 26 is in contact with the vertex point 36 of the lobe 34, and extends along the radial direction of the hydraulic machine 20. Further, the second line L2 here is a line connecting the cam center O and the inflection point Z_{inf} and extends parallel to the radial direction of the hydraulic machine 20. Therefore, the angle X corresponds to an angle between the cylinder center axis C to the radial direction R in such a state that the roller 26 is in contact with the vertex point 36 of the lobe 34, and the angle Y corresponds to an angle between the cylinder center axis C to the radial direction R in such a state that the roller 26 is in contact with the inflection point Z_{inf} of the cam surface 33.

In addition, the concrete value of the angle X may be an arbitrary numerical value that satisfies the above-mentioned inequality 0 < X < Y, and for example, may be not less than 1 degree and not greater than 44 degrees.

Moreover, in addition to the inclination arrangement of the cylinder 22 with respect to the radial direction R, the piston 24 may have the following configuration for the purpose of further reducing the effect of the side force Fs.

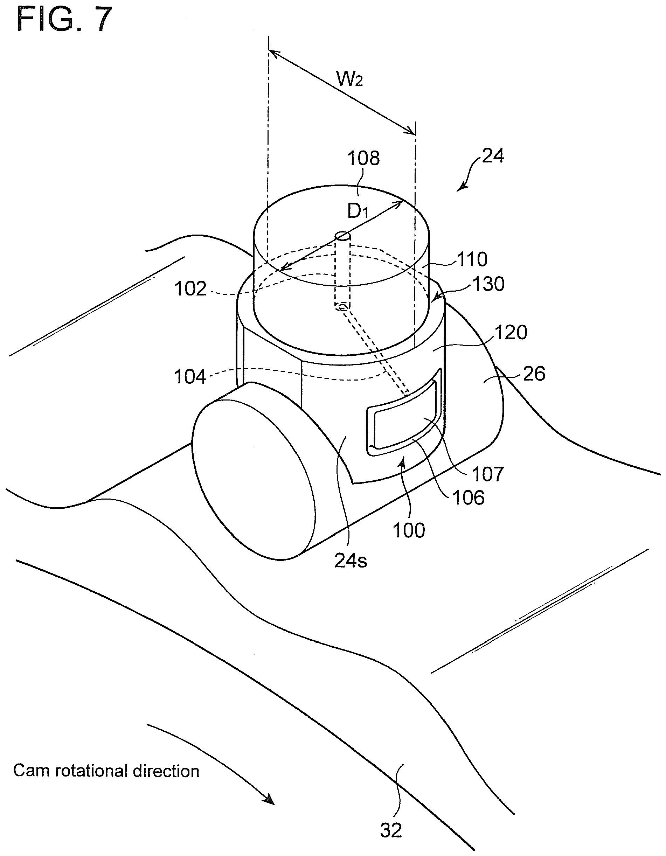

FIG. 7 is an oblique view of a peripheral structure of the piston according to one embodiment.

In the embodiment illustrated in FIG. 7, each of the pistons 24 includes a first section 110 having a pressure receiving surface 108 for receiving pressure from operating oil in the hydraulic chamber 25, and a second section 120 disposed closer to the cam 32 than the first section 110 and engaging with the roller 26. Further, a stepped portion 130 is disposed between the first section 110 and the second section 120 such that a width W₂ of the second section 120 along the rotational direction of the cam 32 is greater than a diameter D₁ of the first section 110.

With this configuration, as the surface area of the second section 120 of the piston 24 increases, the side force Fs along the rotational direction of the cam 32 can be received by both the second section 120 of the piston 24 and an inner wall of the cylinder 22 facing the second section 120.

Moreover, as illustrated in FIG. 7, in some embodiments, at least one hydrostatic pad 100 is provided on a piston surface 24S of each of the pistons to face each of the cylinders 22. The hydrostatic pad 100 includes an annular groove 196 communication with the hydraulic chamber 25 through inner channels 102 and 104 formed in the piston 24, and a land 107 surrounded by the annular groove 106. The hydrostatic pad 100 is configured so that high pressure operating oil in the hydraulic chamber 25 is supplied to the annular groove 106 through the inner channels 102 and 104. The operating oil supplied to the annular groove 106 enters the clearance between piston surface 24S and the inner wall surface of the cylinder 22 so as to increase the pressure in this clearance. As a result, the side force acting between the piston 24 and the cylinder 22 can be opposed by this, and wear of the piston 24 and the cylinder 22 can be reduced.

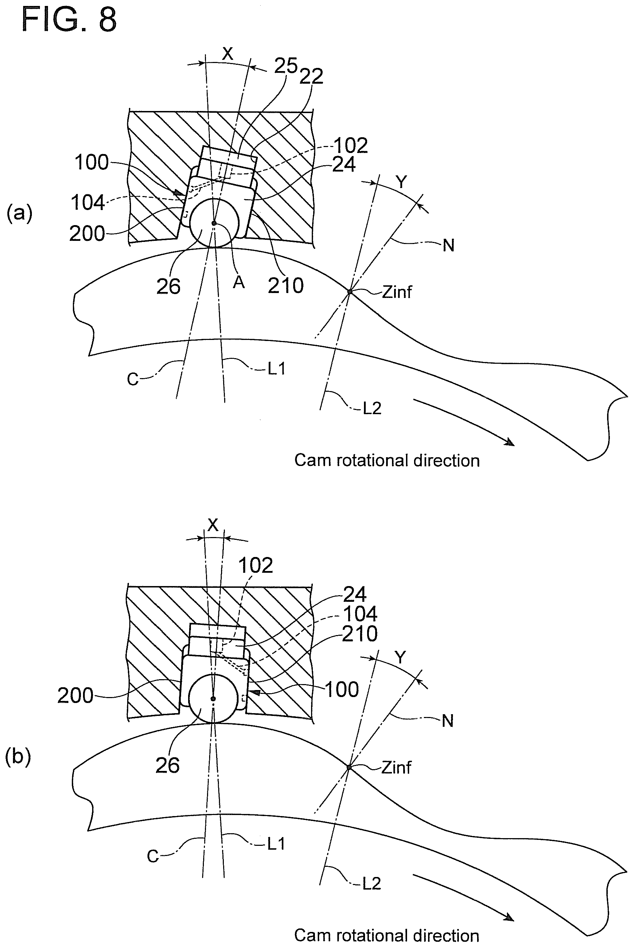

FIG. 8(a) and (b) are views of the configuration of the hydrostatic pad 100 according to one embodiment.

In some embodiments, in the case where the hydraulic machine 20 is constituted by a hydraulic pump having the cylinder 22 inclining to the radial direction R such as to satisfy the relation of 0.5Y < X < Y, m is set not less than n, where m is the number of the hydrostatic pads 100 in a first region 200 disposed on an upstream side of the piston surface 24S in the rotational direction of the cam 32 and is an integer not less than 1, and n is the number of the hydrostatic pads 100 in a second region 210 disposed on a downstream side of the piston surface 24S in the rotational direction of the cam 32 and is an integer not less than zero.

In the illustrative embodiment of FIG. 8(a), m being the number of the hydrostatic pads 100 in the first region 200 is 1, and n being the number of the hydrostatic pads 100 in the second region 210 is zero.

The side force along the direction opposite to the rotational direction of the cam 32 is mainly borne by m hydrostatic pads disposed in the first region 200 which is on an upstream side of the piston surface 24S in the rotational direction of the cam 32. On the other hand, the side force along the rotational direction of the cam 32 is mainly born by n hydrostatic pads disposed in the second region 210 which is on a downstream side of the piston surface 24S in the rotational direction of the cam 32.

Here, in the case where the relation of 0.5Y < X < Y is satisfied where X is an angle between the cylinder center axis C and the approximately radial direction (the first line L1) in such a state that the roller 26 is in contact with the vertex point 36 of the lobe 34 and Y is an angle between the normal line at the inflection point Z_{inf} on the cam surface 33 and the radial direction (the second line L2), a peak value F₂ of the side force along the direction opposite to the rotational direction of the cam 32 becomes relatively large.

Therefore, by setting the number m of the hydrostatic pads in the first region 200 not smaller than the number n of the hydrostatic pads 100 in the second region 210, the side force along the direction opposite to the rotational direction of the cam, which has relatively large peak value, can be effectively received by the m hydrostatic pads 100 in the first region 200. On the other hand, the side force along the rotational direction of the cam, which has relatively small peak value, can be effectively received by the n hydrostatic pads 100 in the second region 210.

Moreover, if the number of the hydrostatic pads 100 is too large, the amount of the operating oil supplied to the hydrostatic pads 100 (the amount of operating oil leaking from the hydraulic chamber 25) increases. This may be one of the causes of performance decline of the hydraulic pump. Therefore, by setting the number n of the hydrostatic pads 100 in the second region 210 not greater than the number m of the hydrostatic pads 100 in the first region 200, the total number of the hydrostatic pads 100 (=m+n) is reduced and hence, the performance decline of the hydraulic pump can be suppressed.

In another embodiment, in the case where the hydraulic machine 20 is constituted by a hydraulic pump having the cylinder 22 inclining to the radial direction R such as to satisfy the relation of 0.5Y < X < Y, the hydrostatic pad 100 in the first region 200 disposed on an upstream side of the piston surface 24S in the rotational direction of the cam has load capacity higher than load capacity of the hydrostatic pad 100 in the second region 210 disposed on a downstream side of the piston surface 24S in the rotational direction. For example, the area of the hydrostatic pad 100 in the first region 200 may be larger than the area of the hydrostatic pad 100 in the second region 210.

By setting the load capacity of the hydrostatic pad 100 in the first region 200 higher than the load capacity of the hydrostatic pad 100 in the second region 210, the side force along the direction opposite to the rotational direction of the cam 32, which has relatively large peak value, can be effectively received. On the other hand, the side force along the rotational direction of the cam, which has relative small peak value, can be received by the hydrostatic pads 100 in the second region 210, which has relatively low load capacity.

Further, if the area of the hydrostatic pad 100 is enhanced to improve the load capacity of the hydrostatic pad 100, the amount of the operating oil supplied to the hydrostatic pad 100 (the amount of the operating oil leaking from the hydraulic chamber 25) increases. This may be one of the causes of performance decline of the hydraulic pump. Therefore, by setting the load capacity of the hydrostatic pad 100 in the second region 210 below the load capacity of the hydrostatic pad 100 in the first region 200, the total amount of the operating oil supplied to the hydrostatic pads 100 in both the first region 200 and the second region 210 (the amount of the operating oil leaking from the hydraulic chamber 25) is reduced and hence, the performance decline of the hydraulic pump can be suppressed.

In another embodiment, in the case where the hydraulic machine 20 is constituted by a hydraulic pump having the cylinder 22 inclining to the radial direction R such as to satisfy the relation of 0 < X ≤ 0.5Y, m is set not greater than n, where m is the number of the hydrostatic pads 100 in the first region 200 disposed on an upstream side of the piston surface 24S in the rotational direction of the cam 32 and is an integer not less than 1, and n is the number of the hydrostatic pads 100 in the second region 210 disposed on a downstream side of the piston surface 24S in the rotational direction of the cam 32 and is an integer not less than zero.

In the illustrative embodiment of FIG. 8(b), m being the number of the hydrostatic pads 100 in the first region 200 is zero, and n being the number of the hydrostatic pads 100 in the second region 210 is one.

In the case where the relation of 0 < X ≤ 0.5Y is satisfied where X is an angle between the cylinder center axis C and the approximately radial direction (the first line L1) in such a state that the roller 26 is in contact with the vertex point 36 of the lobe 34 and Y is an angle between the normal line at the inflection point Z_{inf} on the cam surface 33 and the radial direction (the second line L2), the peak value F₁ of the side force along the rotational direction of the cam 32 increases relatively. Therefore, by setting the number n of the hydrostatic pads 100 in the second region 210 not smaller than the number m of the hydrostatic pads 100 in the first region 200, the side force along the rotational direction of the cam, which has relatively large peak value, can be effectively received by the n hydrostatic pads 100 in the second region 210. On the other hand, the side force along the direction opposite to the rotational direction of the cam, which has relatively small peak value, can be effectively received by the m hydrostatic pads 100 in the first region 200 where m is not greater than n.

Moreover, if the number of the hydrostatic pads 100 is too large, the amount of the operating oil supplied to the hydrostatic pads 100 (the amount of operating oil leaking from the hydraulic chamber 25) increases. This may be one of the causes of performance decline of the hydraulic pump. Therefore, by setting the number m of the hydrostatic pads 100 in the first region 200 not greater than the number n of the hydrostatic pads 100 in the second region 210, the total number of the hydrostatic pads 100 (=m+n) is reduced and hence, the performance decline of the hydraulic pump can be suppressed.

In another embodiment, in the case where the hydraulic machine 20 is constituted by a hydraulic pump having the cylinder 22 inclining to the radial direction R such as to satisfy the relation of 0 < X ≤ 0.5Y, the hydrostatic pad 100 in the first region 200 disposed on the upstream side of the piston surface 24S in the rotational direction of the cam 32 has load capacity not higher than the load capacity of the hydrostatic pad 100 in the second region 210 disposed on the downstream side of the piston surface 24S in the rotational direction. For example, the area of the hydrostatic pad 100 in the second region 210 may be larger than the area of the hydrostatic pad 100 in the first region 200.

By setting the load capacity of the hydrostatic pad 100 in the second region 210 not less than the load capacity of the hydrostatic pad 100 in the first region 200, the side force along the rotational direction of the cam 32, which has relatively large peak value, can be effectively received. On the other hand, the side force along the direction opposite to the rotational direction of the cam, which has relative small peak value, can be received by the hydrostatic pads 100 in the first region 200, which has relatively low load capacity.

Further, if the area of the hydrostatic pad 100 is enhanced to improve the load capacity of the hydrostatic pad 100, the amount of the operating oil supplied to the hydrostatic pad 100 (the amount of the operating oil leaking from the hydraulic chamber 25) increases. This may be one of the causes of performance decline of the hydraulic pump. Therefore, by setting the load capacity of the hydrostatic pad 100 in the second region 210 below the load capacity of the hydrostatic pad 100 in the first region 200, the total amount of the operating oil supplied to the hydrostatic pads 100 in both the first region 200 and the second region 210 (the amount of the operating oil leaking from the hydraulic chamber 25) is reduced and hence, the performance decline of the hydraulic pump can be suppressed.

Next, the opening-closing timing of the low-pressure valve 40 and the high pressure valve 50 in the case where the hydraulic machine 20 is a hydraulic pump is now explained. The opening-closing timing explained below may be applied only to the low pressure valve 40 and the high pressure valve 50 belonging to some hydraulic chambers 25.

For example, the hydraulic machine 20 may be designed so that displacement volume is adjustable by changing a ratio of the number of the hydraulic chambers 25 (active chamber) which contribute to generation of high-pressure operating oil to the number of the hydraulic chamber 25 (non-active chamber) which do not contribute to generation of high-pressure operating oil. In this case, the opening-closing timing of the high pressure valves 50 and the low pressure valves 40 belonging to the active chambers may be adjusted as described below, while the low pressure valve 40 and the high pressure valve 50 belonging to the non-active chambers are kept closed regardless of the location of the piston 24. Further, the state (an active state or a non-active state) of each of the hydraulic chambers 25 may be determined for every period of the reciprocating motion of the piston 24 so as to obtain desired displacement volume of the hydraulic machine 20.

FIG. 9 is a chart showing the opening-closing timing of the low pressure valve 40 and the high pressure valve 50 according to one embodiment. In FIG. 9, the horizontal axis represents a position of the contact point Z on the cam surface 33, and the vertical axis represents an open-close state of the high pressure valve 50, an excitation state and an open-close state f the low pressure valve 50, and a pressure of the operating oil in the hydraulic chamber 25. Moreover, in FIG. 9, the first point P₁ is located nearer to the vertex point 36 out of a pair of reference points Z_{ref} on the cam surface 33 at which the normal line of the cam surface 33 meets the cylinder center axis C between the bottom point 38 and the vertex point 36 of the lobe 34, and the second point P₂ is a point on the cam surface 33 which corresponds to a top dead center (TDC) of the piston 24, and a third point P₃ is a starting point of the working region 34A (see FIG.4).

Fundamentally, the low pressure valve 40 is closed when the roller 26 is located on the working region 34A of the cam surface 33, and is opened when the roller 26 is located on the breathing region 34B of the cam surface 33. In some embodiments, the low pressure valve 40 is configured to be kept closed at least in a part of a period in which the roller 26 travels from the first point P₁ to the second point P₂, and to open after each of the roller 26 travels through the second point P₂.

In one embodiment, the low pressure valve 40 is a normally-open electromagnetic valve which includes a first seat 41, a first valve element 42, a first stem 44, a solenoid 46, and a first energizing member 48, as illustrated in FIG. 3. In this case, as illustrated in FIG. 9, when the roller 26 is located near the third point P₃ through the first point to the second point, the solenoid 46 may be energized to close the low pressure valve 40. When the roller 26 travels from the third point P₃ through the first point P₁ to the second point P₂, the low pressure valve 40 may be kept closed. Further, when the roller 26 reaches the fourth point P₄ which is disposed on an opposite side of the second point P₂ from the first point P₁ (the fourth point P₄ is a ending point of the working region 34A), the low pressure valve 40 may be opened as an energizing force by the first energizing member 48 exceeds differential pressure of the operating oil between both sides of the first valve element 42, and when the roller 26 travels from the fourth point P₄ to the third point P₃, the low pressure valve 40 may stay open.

On the other hand, the high pressure valve is opened when the roller 26 is located on the working region 34A of the cam surface 33, and is closed when the roller 26 is located on the breathing region 34B of the cam surface. In some embodiments, the high pressure valve 50 is configured to be kept open at least in a part of the period when the roller 26 travels from the first point P₁ to the second point P₂, and is closed after the rollers 26 travels past the second point P₂.

In one embodiment, the high pressure valve 50 is, as illustrated in FIG.3, a check valve including the second seat 51, the second valve element 52 engageable with the second seat 51 and the second energizing member 58 for energizing the second element 52 to a second seat side 51. In such case, as illustrated in FIG.9, the high pressure valve 50 is configured to open when the roller 26 travels past the third point P3 and then the differential pressure of the both sides of the second valve element 52 exceeds the energizing force by the second energizing member 58. Further, the high pressure valve 50 is configured to close when the differential pressure of the both sides of the second valve element 52 is smaller than the energizing force by the second energizing member 58 before the roller 26 reaches the fourth point P₄.

As described above, at least in a part of a period in which the roller 26 is between the first point P₁ being one of the reference points Z_{ref} and the second point P₂ corresponding to the top dead center of the piston 24, the low pressure valve 40 is closed, and the high pressure valve 50 is kept open. Once the roller 26 passes through the second point P₂, the low pressure valve 40 is opened and the high pressure valve 50 is closed so that the direction of the side force Fs is reversed while the roller 26 moves from the bottom point 38 to near the vertex point 36 of the lobe 34. Specifically, while the roller 26 travels between the bottom point 38 and the vertex point 36 of the lobe 34, the piston 24 receives both the side force along the direction opposite to the rotational direction of the cam 32 and the side force along the rotational direction of the cam 32, but the peak value F₁ of the side force along the rotational direction of the cam 32 is reduced.

In this manner, by appropriately setting the opening-closing timing of the high pressure valve 50 and the low pressure valve 40, it is possible to lower the peak value F₁ of the side force along the rotational direction of the cam while maintaining the length of the working region 34A of the cam surface 33.

Moreover, as the direction of the side force Fs is reversed when the roller 26 travels through the first point P₁, a lubricating condition of the piston surface 24S changes significantly before and after the roller 26 travels past the first point P₁. For instance, as the direction of the side force Fs is reversed, flow of the lubricating oil between the piston surface 24S and the inner wall surface of the cylinder 22 is promoted.

As explained above, according to the above-mentioned embodiments, the relation of 0 < X < Y is satisfied, where X is an angle between the cylinder center axis C and the first line L1 in such a state that roller 26 is in contact with the vertex point 26 of the lobe 34, and Y is an angle between the normal line N of the cam surface 33 at the inflection point Z_{inf} of the cam surface 33 and the second line L2. The first line here L1 is a line connecting the roller center axis A and the cam center O in such a state that the roller 26 is in contact with the vertex point 36 of the lobe 34 (the line extending along the radial direction R). Further, the second line L2 here is a line connecting the cam center O and the inflection point Z_{inf} on the cam surface 33 and extends parallel to the radial direction R. Specifically, the angle X corresponds to an angle between the cylinder center axis C to the radial direction R in such a state that the roller 26 is in contact with the vertex point 36 of the lobe 34, and the angle Y corresponds to an angle between the cylinder center axis C to the radial direction R in such a state that the roller 26 is in contact with the inflection point Z_{inf} of the cam surface 33. As a result, by setting the angle X to satisfy the relation of 0 < X < Y, the cylinder 22 can be arranged at an appropriate inclination angle with respect to the radial direction R, and the peak value of the side force decreases. As a result, the effect of the side force can be mitigated.

The above embodiments describe the hydraulic machine 20 which is used as at least one of the hydraulic pump 8 or the hydraulic motor 10 for the wind turbine generator. This, however, does not limit the use of the hydraulic machine 20.

### [Reference Signs list]

- 1: Wind turbine generator
- 2: Blade
- 3: Rotor
- 4: Hub
- 5: Hub cover
- 6: Rotation shaft
- 8: Hydraulic pump
- 10: Hydraulic motor
- 12: High pressure oil line
- 14: Low pressure oil line
- 16: Generator
- 18: Nacelle
- 19: Tower
- 20: Hydraulic machine
- 21: Cylinder block
- 21S: Segment
- 21H: Sleeve hole
- 22: Cylinder
- 23: Cylinder sleeve
- 24: Piston
- 24S: Piston surface
- 25: Hydraulic chamber
- 26: Roller
- 30: Rotation shaft
- 32: Cam
- 33: Cam surface
- 34: Lobe
- 36: Vertex point
- 38: Bottom point
- 40: Low pressure valve
- 41: First seat
- 42: First valve element
- 44: First stem
- 46: Solenoid
- 48: First energizing member
- 50: High pressure valve
- 51: Second seat
- 52: Second valve element
- 58: Second energizing member
- 100: Hydrostatic pad
- 102: Inner channel
- 104: Inner channel
- 106: Annular groove
- 107: Land
- 108: Pressure receiving surface
- 110: First section
- 120: Second section
- 130: Stepped portion
- 200: First region
- 210: Second region

## Claims

1. A radial piston hydraulic machine comprising:
at least one cylinder (22) having an inner wall;
at least one piston (24) provided reciprocably in the at least one cylinder, respectively;
a cam (32) having a cam surface (33) formed by a plurality of lobes (34) arranged along a circumferential direction of the hydraulic machine, the cam (32) being configured rotatably so that the plurality of lobes (34) moves relative to each of the at least one piston (24) in the circumferential direction; and
at least one roller (26) rotatably engaging with the at least one piston (24), respectively, the at least one roller contacting the cam surface (33),
each of the at least one cylinder (22) is arranged inclining with respect to a radial direction of the hydraulic machine to satisfy a relation of 0 < X < Y, where X is an angle between a center axis (C) of each of the at least one cylinder (22) and a first line (L1) connecting a center (A) of said each of the at least one roller (26) and a center (O) of the cam (32) in such a state that each of the at least one roller (26) is in contact with a vertex point (36) of the lobe (34), and Y is an angle between a normal line (N) of the cam surface at an inflection point (Zinf) of the cam surface (33) between a bottom point and the vertex point of the lobe and a second line (L2) connecting the center (O) of the cam and the inflection point (Zinf),
each of the at least one piston (24) includes a first section (110) having a pressure receiving surface for receiving pressure from operating oil in a hydraulic chamber (25) formed by each of the at least one cylinder (22) and each of the at least one piston (24), and a second section (120) disposed closer to the cam (32) than the first section and engaging with the at least one roller (26); and
a stepped portion (130) is disposed between the first section and the second section such that a width of the second section (120) along a rotational direction of the cam (32) is greater than a diameter of the first section (110); and
**characterized in that** the second section (120) and the inner wall of the cylinder (22) facing the second section (120) are configured to receive a side force along a rotational direction of the cam (32).

2. The hydraulic machine according to claim 1, further comprising:
at least one hydrostatic pad (100) disposed on a piston surface (24S) of each of the at least one piston (24) to face each of the at least one cylinder (22), wherein:
the hydraulic machine is a hydraulic pump (8) which is configured to pressurize operating oil in a hydraulic chamber which is formed by each of the at least one cylinder and each of the at least one piston;
each of the at least one cylinder (22) includes a first end and a second end which is nearer to the cam (32) than the first end in the radial direction of the hydraulic machine, and inclines with respect to the radial direction such that a circumferential position of the first end is displaced downstream in a rotational direction of the cam (32) from a circumferential position of the second end and such that a relation of 0.5Y < X < Y is satisfied; and
a relation of m ≥ n is satisfied, where m is the number of the hydrostatic pads (100) in a first region disposed on an upstream side of the piston surface (24S) in the rotational direction of the cam (32) and is an integer not less than 1, and n is the number of the hydrostatic pads (100) in a second region disposed on a downstream side of the piston surface (24S) in the rotational direction of the cam and is an integer not less than 0.

3. The hydraulic machine according to claim 1, further comprising:
a plurality of hydrostatic pads (100) disposed on a piston surface (24S) of each of the at least one piston (24) to face each of the at least one cylinder (22), wherein:
the hydraulic machine is a hydraulic pump (8) which is configured to pressurize operating oil in a hydraulic chamber which is formed by each of the at least one cylinder and each of the at least one piston;
each of the at least one cylinder (22) includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0.5Y < X < Y is satisfied; and
the hydrostatic pad (100) in a first region disposed on an upstream side of the piston surface (24S) in the rotational direction of the cam has load capacity higher than load capacity of the hydrostatic pad (100) in a second region disposed on a downstream side of the piston surface (24S) in the rotational direction.

4. The hydraulic machine according to claim 1, further comprising:
at least one hydrostatic pad (100) disposed on a piston surface (24S) of each of the at least one piston (24) to face each of the at least one cylinder (22), wherein:
the hydraulic machine is a hydraulic pump (8) which is configured to pressurize operating oil in a hydraulic chamber which is formed by each of the at least one cylinder and each of the at least one piston;
each of the at least one cylinder (22) includes a first end and a second end which is nearer to the cam (32) than the first end in the radial direction of the hydraulic machine, and inclines with respect to the radial direction such that a circumferential position of the first end is displaced downstream in a rotational direction of the cam (32) from a circumferential position of the second end and such that a relation of 0 < X ≤ 0.5Y is satisfied; and
a relation of m ≤ n is satisfied, where m is the number of the hydrostatic pads (100) in a first region on an upstream side of the piston surface (24S) in the rotational direction of the cam (32) and is an integer not less than 1, and n is the number of the hydrostatic pads (100) in a second region on a downstream side of the piston surface (24S) in the rotational direction of the cam and is an integer not less than 0.

5. The hydraulic machine according to claim 1, further comprising:
at least one hydrostatic pad (100) disposed on a piston surface (24S) of each of the at least one piston (24) to face each of the at least one cylinder (22), wherein:
the hydraulic machine is a hydraulic pump (8) which is configured to pressurize operating oil in a hydraulic chamber which is formed by each of the at least one cylinder and each of the at least one piston;
each of the at least one cylinder (22) includes a first end and a second end which is nearer to the cam than the first end in the radial direction of the hydraulic machine, and inclines with respect to the radial direction such that a circumferential position of the first end is displaced downstream in a rotational direction of the cam from a circumferential position of the second end and such that a relation of 0 < X ≤ 0.5Y is satisfied; and
the hydrostatic pad (100) in a first region disposed on an upstream side of the piston surface (24S) in the rotational direction of the cam has load capacity which is not higher than load capacity of the hydrostatic pad (100) in a second region disposed on a downstream side of the piston surface (24S) in the rotational direction.

6. The hydraulic machine according to any one of claims 1 to 5, further comprising:
a low pressure oil line (14) where operating oil flows;
a high pressure oil line (12) where the operating oil having pressure higher than in the low pressure oil line flows;
a low pressure valve (40) disposed between the low pressure oil line (14) and a hydraulic chamber (25) formed by each of the at least one cylinder and each of the at least one piston;
a high pressure valve (50) disposed between the hydraulic chamber (25) and the high pressure oil line, wherein:
the low pressure valve (40) belonging to the at least one hydraulic chamber is configured to be kept closed at least in a part of a period in which each of the at least one roller (26) travels from a first point to a second point on the cam surface (33) and to open after each of the at least one roller (26) travels through the second point, where the first point is a point nearer to the vertex point out of a pair of reference points on the cam surface at which the normal line (N) of the cam surface (33) meets the center axis (C) of the cylinder (22) between the bottom point and the vertex point of the lobe, and the second point is a point on the cam surface (33) which corresponds to a top dead center of each of the at least one piston (24); and
the high pressure valve (50) belonging to the at least one hydraulic chamber is configured to be kept open at least in a part of a period in which each of the at least one roller (26) travels from the first point to the second point, and to close after each of the roller travels through the second point.

7. The hydraulic machine according to claim 6, wherein:
the hydraulic machine is a hydraulic pump (8) configured to pressurize the operating oil;
the low pressure valve (40) is a normally-open electromagnetic valve which includes a first seat (41), a first valve element (42) being contactable with the first seat, a first stem (44) connected to the first valve element (42), a solenoid (46) configured to generate a magnetic force for driving the first stem, and a first energizing member (48) for energizing the first valve element (42) to an opposite side of the first seat (41);
the normally-open electromagnetic valve (40) belonging to the at least one hydraulic chamber is configured:
when each of the at least one roller (26) is positioned near a third point on the cam surface (33) which corresponds to a bottom dead center of each of the at least one piston (24), to close as the solenoid is energized;
when each of the at least one roller (26) travels from the third point through the first point to the second point, to stay closed;
when each of the at least one roller (26) reaches a fourth point which is disposed on an opposite side of the second point from the first point, to open as an energizing force by the first energizing member (48) exceeds differential pressure of the operating oil between both sides of the first valve element (42); and
when each of the at least one roller (26) travels from the fourth point to the third point, to stay open;
the high pressure valve is a check valve including a second seat (51), a second valve element (52) engageable with the second seat and a second energizing member (58) for energizing the second element to a second seat side; and
the check valve is configured to open as an energizing force by the second energizing member (58) exceeds differential pressure of the operating oil between both sides of the second valve element (52) after each of the at least one roller (26) travels through the third point, and to close as the differential pressure decreases below the energizing force before each of the at least one roller (26) reaches the fourth point.

8. The hydraulic machine according to claim 6 or 7,
wherein a lubricant supply condition for supplying lubricating oil to a piston surface (24S) of the piston (24) to face each of the at least one cylinder (22) is determined based on change in a lubrication state of the piston surface before and after each of the at least one roller (26) travels through the first point.

9. The hydraulic machine according to any one of claims 1 to 8,
wherein each of the at least one cylinder (22) inclines with respect to the radial direction such that a relation of 0.8xF2 ≤ F1 ≤ 1.2xF2 is satisfied, where F1 is a maximum value of a side force along a rotational direction of the cam (32) and F2 is a maximum value of the side force along a direction opposite to the rotational direction of the cam (32).

10. A renewable energy power generating apparatus comprising:
at least one blade (2) for receiving renewable energy;
a hub (4) on which the at least one blade is mounted;
a hydraulic pump (8) configured to be driven by rotation of the hub;
a hydraulic motor (10) configured to be driven by pressure oil generated by the hydraulic pump (8); and
a generator (16) configured to be driven by the hydraulic motor, wherein:
at least one of the hydraulic pump (8) or the hydraulic motor (10) is a radial piston hydraulic machine according to any one of claims 1 to 9.

11. The renewable energy power generating apparatus according to claim 10,
wherein the renewable energy power generating apparatus is a wind turbine generator configured to generate electric power from wind in a form of the renewable energy.

## Patentansprüche

1. Radialkolben-Hydraulikmaschine, umfassend:
mindestens einen Zylinder (22) mit einer Innenwand,
mindestens einen Kolben (24), der jeweils hin- und hergehend in dem mindestens einen Zylinder bereitgestellt ist,
einen Nocken (32) mit einer Nockenfläche (33), welche aus einer Vielzahl von Ausbuchtungen (34) gebildet ist, die entlang einer Umfangsrichtung der Hydraulikmaschine eingerichtet sind, wobei der Nocken (32) drehbar ausgelegt ist, so dass sich die Vielzahl von Ausbuchtungen (34) relativ zu jedem von dem mindestens einen Kolben (24) in der Umfangsrichtung bewegt, und
mindestens eine Rolle (26), die jeweils drehbar mit dem mindestens einen Kolben (24) in Eingriff steht, wobei die mindestens eine Rolle mit der Nockenfläche (33) in Kontakt steht,
wobei jeder von dem mindestens einen Zylinder (22) in Bezug auf eine radiale Richtung der Hydraulikmaschine geneigt eingerichtet ist, um eine Beziehung von 0 < X < Y zu erfüllen, wobei X ein Winkel ist zwischen einer zentralen Achse (C) jedes von dem mindestens einen Zylinder (22) und einer ersten Linie (L1), die ein Zentrum (A) von der jeweils einen von der mindestens einen Rolle (26) und ein Zentrum (O) des Nockens (32) in einem solchen Zustand verbindet, dass jede von der mindestens einen Rolle (26) mit einem Scheitelpunkt (36) der Ausbuchtung (34) in Kontakt steht, und Y ein Winkel ist zwischen einer Normalen (N) der Nockenfläche an einem Inflexionspunkt (Zinf) der Nockenfläche (33) zwischen einem Bodenpunkt und dem Scheitelpunkt der Ausbuchtung und einer zweiten Linie (L2), die das Zentrum (O) des Nockens und den Inflexionspunkt (Zinf) verbindet,
wobei jeder von dem mindestens einen Kolben (24) eine erste Sektion (110) mit einer Druckaufnahmefläche zum Aufnehmen eines Drucks von Betriebsöl in einer Hydraulikkammer (25), die durch jeden von dem mindestens einen Zylinder (22) und jeden von dem mindestens einen Kolben (24) gebildet wird, und eine zweite Sektion (120), die näher bei dem Nocken (32) angeordnet ist als die erste Sektion und mit der mindestens einen Rolle (26) in Eingriff steht, aufweist, und
wobei ein abgestufter Abschnitt (130) zwischen der ersten Sektion und der zweiten Sektion derart angeordnet ist, dass eine Breite der zweiten Sektion (120) entlang einer Drehrichtung des Nockens (32) größer ist als ein Durchmesser der ersten Sektion (110), und
**dadurch gekennzeichnet, dass** die zweite Sektion (120) und die Innenwand des Zylinders (22), die der zweiten Sektion (120) zugewandt ist, ausgelegt sind, eine seitliche Kraft entlang einer Drehrichtung des Nockens (32) aufzunehmen.

2. Hydraulikmaschine nach Anspruch 1, ferner umfassend:
mindestens ein hydrostatisches Kissen (100), das auf einer Kolbenfläche (24S) jedes von dem mindestens einen Kolben (24) angeordnet ist, um dem mindestens einen Zylinder (22) zugewandt zu sein, wobei:
die Hydraulikmaschine eine Hydraulikpumpe (8) ist, die ausgelegt ist, Betriebsöl in einer Hydraulikkammer unter Druck zu setzen, die durch jeden von dem mindestens einen Zylinder und jeden von dem mindestens einen Kolben gebildet wird,
jeder von dem mindestens einen Zylinder (22) ein erstes Ende und ein zweites Ende aufweist, das näher bei dem Nocken (32) liegt als das erste Ende in der radialen Richtung der Hydraulikmaschine, und in Bezug auf die radiale Richtung derart geneigt ist, dass eine Umfangsposition des ersten Endes stromabwärts in einer Drehrichtung des Nockens (32) von einer Umfangsposition des zweiten Endes verschoben ist, und derart, dass eine Beziehung von 0,5 Y < X < Y erfüllt ist, und
eine Beziehung von m ≥ n erfüllt ist, wobei m die Anzahl der hydrostatischen Kissen (100) in einer ersten Zone ist, die auf einer stromaufwärtigen Seite der Kolbenfläche (24S) in der Drehrichtung des Nockens (32) angeordnet ist, und eine ganze Zahl nicht kleiner als 1 ist, und n die Anzahl der hydrostatischen Kissen (100) in einer zweiten Zone ist, die auf einer stromabwärtigen Seite der Kolbenfläche (24S) in der Drehrichtung des Nockens angeordnet ist, und eine ganze Zahl nicht kleiner als 0 ist.

3. Hydraulikmaschine nach Anspruch 1, ferner umfassend:
eine Vielzahl von hydrostatischen Kissen (100), die auf einer Kolbenfläche (24S) jedes von dem mindestens einen Kolben (24) angeordnet sind, um jedem von dem mindestens einen Zylinder (22) zugewandt zu sein, wobei:
die Hydraulikmaschine eine Hydraulikpumpe (8) ist, die ausgelegt ist, Betriebsöl in einer Hydraulikkammer unter Druck zu setzen, die durch jeden von dem mindestens einen Zylinder und jeden von dem mindestens einen Kolben gebildet wird,
jeder von dem mindestens einen Zylinder (22) ein erstes Ende und ein zweites Ende aufweist, das näher bei dem Nocken liegt als das erste Ende in der radialen Richtung der Hydraulikmaschine, und in Bezug auf die radiale Richtung derart geneigt ist, dass eine Umfangsposition des ersten Endes stromabwärts in einer Drehrichtung des Nockens von einer Umfangsposition des zweiten Endes verschoben ist, und derart, dass eine Beziehung von 0,5 Y < X < Y erfüllt ist, und
das hydrostatische Kissen (100) in einer ersten Zone, die auf einer stromaufwärtigen Seite der Kolbenfläche (24S) in der Drehrichtung des Nockens angeordnet ist, eine höhere Lastkapazität aufweist als eine Lastkapazität des hydrostatischen Kissens (100) in einer zweiten Zone, die auf einer stromabwärtigen Seite der Kolbenfläche (24S) in der Drehrichtung angeordnet ist.

4. Hydraulikmaschine nach Anspruch 1, ferner umfassend:
mindestens ein hydrostatisches Kissen (100), das auf einer Kolbenfläche (24S) jedes von dem mindestens einen Kolben (24) angeordnet ist, um jedem von dem mindestens einen Zylinder (22) zugewandt zu sein, wobei:
die Hydraulikmaschine eine Hydraulikpumpe (8) ist, die ausgelegt ist, Betriebsöl in einer Hydraulikkammer unter Druck zu setzen, die durch jeden von dem mindestens einen Zylinder und jeden von dem mindestens einen Kolben gebildet wird,
jeder von dem mindestens einen Zylinder (22) ein erstes Ende und ein zweites Ende aufweist, das näher bei dem Nocken (32) liegt als das erste Ende in der radialen Richtung der Hydraulikmaschine, und in Bezug auf die radiale Richtung derart geneigt ist, dass eine Umfangsposition des ersten Endes stromabwärts in einer Drehrichtung des Nockens (32) von einer Umfangsposition des zweiten Endes verschoben ist, und derart, dass eine Beziehung von 0 < X ≤ 0,5 Y erfüllt ist, und
eine Beziehung von m ≤ n erfüllt ist, wobei m die Anzahl der hydrostatischen Kissen (100) in einer ersten Zone ist, die auf einer stromaufwärtigen Seite der Kolbenfläche (24S) in der Drehrichtung des Nockens (32) angeordnet ist, und eine ganze Zahl nicht kleiner als 1 ist, und n die Anzahl der hydrostatischen Kissen (100) in einer zweiten Zone auf einer stromabwärtigen Seite der Kolbenfläche (24S) in der Drehrichtung des Nockens ist, und eine ganze Zahl nicht kleiner als 0 ist.

5. Hydraulikmaschine nach Anspruch 1, ferner umfassend:
mindestens ein hydrostatisches Kissen (100), das auf einer Kolbenfläche (24S) jedes von dem mindestens einen Kolben (24) angeordnet ist, um jedem von dem mindestens einen Zylinder (22) zugewandt zu sein, wobei:
die Hydraulikmaschine eine Hydraulikpumpe (8) ist, die ausgelegt ist, Betriebsöl in einer Hydraulikkammer unter Druck zu setzen, die durch jeden von dem mindestens einen Zylinder und jeden von dem mindestens einen Kolben gebildet wird,
jeder von dem mindestens einen Zylinder (22) ein erstes Ende und ein zweites Ende aufweist, das näher bei dem Nocken liegt als das erste Ende in der radialen Richtung der Hydraulikmaschine, und in Bezug auf die radiale Richtung derart geneigt ist, dass eine Umfangsposition des ersten Endes stromabwärts in einer Drehrichtung des Nockens von einer Umfangsposition des zweiten Endes verschoben ist, und derart, dass eine Beziehung von 0 < X ≤ 0,5 Y erfüllt ist, und
das hydrostatische Kissen (100) in einer ersten Zone, die auf einer stromaufwärtigen Seite der Kolbenfläche (24S) in der Drehrichtung des Nockens angeordnet ist, eine Lastkapazität aufweist, die nicht höher ist als eine Lastkapazität des hydrostatischen Kissens (100) in einer zweiten Zone, die auf einer stromabwärtigen Seite der Kolbenfläche (24S) in der Drehrichtung angeordnet ist.

6. Hydraulikmaschine nach einem der Ansprüche 1 bis 5, ferner umfassend:
eine Niederdruckölleitung (14), wo Betriebsöl fließt,
eine Hochdruckölleitung (12), wo das Betriebsöl mit einem höheren Druck als in der Niederdruckölleitung fließt,
ein Niederdruckventil (40), das zwischen der Niederdruckölleitung (14) und einer Hydraulikkammer (25) angeordnet ist, die durch jeden von dem mindestens einen Zylinder und jeden von dem mindestens einen Kolben gebildet wird,
ein Hochdruckventil (50), das zwischen der Hydraulikkammer (25) und der Hochdruckölleitung angeordnet ist, wobei:
das Niederdruckventil (40), das zu der mindestens einen Hydraulikkammer gehört, ausgelegt ist, mindestens in einem Teil einer Periode geschlossen gehalten zu werden, in der sich jede von der mindestens einen Rolle (26) von einem ersten Punkt zu einem zweiten Punkt auf der Nockenfläche (33) bewegt, und sich zu öffnen, nachdem sich jede von der mindestens einen Rolle (26) durch den zweiten Punkt bewegt, wobei der erste Punkt ein Punkt näher bei dem Scheitelpunkt unter einem Paar von Referenzpunkten auf der Nockenfläche ist, wo die Normale (N) der Nockenfläche (33) auf die zentrale Achse (C) des Zylinders (22) zwischen dem Bodenpunkt und dem Scheitelpunkt der Ausbuchtung trifft, und der zweite Punkt ein Punkt auf der Nockenfläche (33) ist, der einem oberen Totpunkt jedes von dem mindestens einen Kolben (24) entspricht, und
das Hochdruckventil (50), das zu der mindestens einen Hydraulikkammer gehört, ausgelegt ist, mindestens in einem Teil einer Periode offen gehalten zu werden, in der sich jede von der mindestens einen Rolle (26) von dem ersten Punkt zu dem zweiten Punkt bewegt, und sich zu schließen, nachdem sich jede von der Rolle durch den zweiten Punkt bewegt.

7. Hydraulikmaschine nach Anspruch 6, wobei:
die Hydraulikmaschine eine Hydraulikpumpe (8) ist, die ausgelegt ist, das Betriebsöl unter Druck zu setzen,
das Niederdruckventil (40) ein normal offenes elektromagnetisches Ventil ist, das aufweist: einen ersten Sitz (41), ein erstes Ventilelement (42), das mit dem ersten Sitz in Kontakt gebracht werden kann, einen ersten Schaft (44), der mit dem ersten Ventilelement (42) verbunden ist, ein Solenoid (46), das ausgelegt ist, eine Magnetkraft zum Antreiben des ersten Schafts zu erzeugen, und ein erstes Erregungselement (48) zum Erregen des ersten Ventilelements (42) auf eine gegenüberliegende Seite des ersten Sitzes (41),
das normal offene elektromagnetische Ventil (40), das zu der mindestens einen Hydraulikkammer gehört, ausgelegt ist:
wenn jede von der mindestens einen Rolle (26) nahe bei einem dritten Punkt auf der Nockenfläche (33) positioniert ist, der einem unteren Totpunkt jedes von dem mindestens einen Kolben (24) entspricht, sich zu schließen, wenn das Solenoid erregt wird,
wenn sich jede von der mindestens einen Rolle (26) von dem dritten Punkt durch den ersten Punkt zu dem zweiten Punkt bewegt, geschlossen zu bleiben,
wenn jede von der mindestens einen Rolle (26) einen vierten Punkt erreicht, der auf einer gegenüberliegenden Seite des zweiten Punkts von dem ersten Punkt angeordnet ist, sich zu öffnen, während eine Erregungskraft von dem ersten Erregungselement (48) einen Differentialdruck des Betriebsöls zwischen beiden Seiten des ersten Ventilelements (42) überschreitet, und
wenn sich jede von der mindestens einen Rolle (26) von dem vierten Punkt zu dem dritten Punkt bewegt, offen zu bleiben,
das Hochdruckventil ein Prüfventil ist, das aufweist: einen zweiten Sitz (51), ein zweites Ventilelement (52), das mit dem zweiten Sitz in Eingriff gebracht werden kann, und ein zweites Erregungselement (58) zum Erregen des zweiten Elements auf eine zweite Sitzseite, und
das Prüfventil ausgelegt ist, sich zu öffnen, während eine Erregungskraft von dem zweiten Erregungselement (58) einen Differentialdruck des Betriebsöls zwischen beiden Seiten des zweiten Ventilelements (52) überschreitet, nachdem sich jede von der mindestens einen Rolle (26) durch den dritten Punkt bewegt, und sich zu schließen, während der Differentialdruck unter die Erregungskraft sinkt, bevor jede von der mindestens einen Rolle (26) den vierten Punkt erreicht.

8. Hydraulikmaschine nach Anspruch 6 oder 7,
wobei ein Schmiermittelzufuhrzustand zum Zuführen von Schmieröl zu einer Kolbenfläche (24S) des Kolbens (24), um jedem von dem mindestens einen Zylinder (22) zugewandt zu sein, auf der Basis einer Änderung in einem Schmierzustand der Kolbenfläche bestimmt wird, bevor und nachdem sich jede von der mindestens einen Rolle (26) durch den ersten Punkt bewegt.

9. Hydraulikmaschine nach einem der Ansprüche 1 bis 8,
wobei jeder von dem mindestens einen Zylinder (22) in Bezug auf die radiale Richtung derart geneigt ist, dass eine Beziehung von 0,8 x F2 ≤ F1 ≤ 1,2 x F2 erfüllt ist, wobei F1 ein Maximalwert einer seitlichen Kraft entlang einer Drehrichtung des Nockens (32) ist, und F2 ein Maximalwert der seitlichen Kraft entlang einer Richtung entgegengesetzt zur Drehrichtung des Nockens (32) ist.

10. Vorrichtung zur Erzeugung von erneuerbarer Energie, umfassend:
mindestens eine Schaufel (2) zum Aufnehmen von erneuerbarer Energie,
eine Nabe (4), an der die mindestens eine Schaufel montiert ist,
eine Hydraulikpumpe (8), die ausgelegt ist, von der Drehung der Nabe angetrieben zu werden,
einen Hydraulikmotor (10), der ausgelegt ist, von Drucköl angetrieben zu werden, das von der Hydraulikpumpe (8) erzeugt wird, und
einen Generator (16), der ausgelegt ist, von dem Hydraulikmotor angetrieben zu werden, wobei:
mindestens eines von der Hydraulikpumpe (8) oder dem Hydraulikmotor (10) eine Radialkolben-Hydraulikmaschine nach einem der Ansprüche 1 bis 9 ist.

11. Vorrichtung zur Erzeugung von erneuerbarer Energie nach Anspruch 10,
wobei die Vorrichtung zur Erzeugung von erneuerbarer Energie ein Windturbinengenerator ist, der ausgelegt ist, elektrische Energie aus Wind in einer Form der erneuerbaren Energie zu erzeugen.

## Revendications

1. Machine hydraulique à piston radial comprenant :
au moins un cylindre (22) ayant une paroi interne ;
au moins un piston (24) prévu de manière réciproque dans le au moins un cylindre, respectivement ;
une came (32) ayant une surface de came (33) formée par une pluralité de lobes (34) agencés le long d'une direction circonférentielle de la machine hydraulique, la came (32) étant configurée en rotation de sorte que la pluralité de lobes (34) se déplace par rapport à chacun du au moins un piston (24) dans la direction circonférentielle ; et
au moins un rouleau (26) se mettant en prise, en rotation, avec le au moins un piston (24) respectivement, l'au moins un rouleau étant en contact avec la surface de came (33),
chacun du au moins un cylindre (22) est agencé incliné par rapport à une direction radiale de la machine hydraulique pour satisfaire une relation de 0 < X < Y, où X est un angle entre un axe central (C) de chacun du au moins un cylindre (22) et une première ligne (L1) raccordant un centre (A) dudit chacun de au moins un rouleau (26) et un centre (0) de la came (32) dans un état tel que chacun du au moins un rouleau (26) est en contact avec un point de sommet (36) du lobe (34), et Y est un angle entre une ligne normale (N) de la surface de came à un point d'inflexion (Zinf) de la surface de came (33) entre un point de fond et le point de sommet du lobe et une seconde ligne (L2) raccordant le centre (0) de la came et le point d'inflexion (Zinf),
chacun du au moins un piston (24) comprend une première section (110) ayant une surface de réception de pression pour recevoir la pression de l'huile de commande dans une chambre hydraulique (25) formée par chacun du au moins un cylindre (22) et chacun du au moins un piston (24) et une seconde section (120) disposée plus à proximité de la came (32) que la première section et se mettant en prise avec le au moins un rouleau (26) ; et
une partie étagée (130) est disposée entre la première section et la seconde section de sorte qu'une largeur de la seconde section (120) le long d'une direction de rotation de la came (32) est supérieure à un diamètre de la première section (110) ; et
**caractérisée en ce que** la seconde section (120) et la paroi interne du cylindre (22) faisant face à la seconde section (120) sont configurées pour recevoir une force latérale le long d'une direction de rotation de la came (32).

2. Machine hydraulique selon la revendication 1, comprenant en outre :
au moins un coussinet hydrostatique (100) disposé sur une surface de piston (24S) de chacun du au moins un piston (24) pour faire face à chacun du au moins un cylindre (22), dans laquelle :
la machine hydraulique est une pompe hydraulique (8) qui est configurée pour mettre sous pression l'huile de commande dans une chambre hydraulique qui est formée par chacun du au moins un cylindre et chacun du au moins un piston ;
chacun du au moins un cylindre (22) comprend une première extrémité et une seconde extrémité qui est plus proche de la came (32) que la première extrémité dans la direction radiale de la machine hydraulique, et s'incline par rapport à la direction radiale de sorte qu'une position circonférentielle de la première extrémité est déplacée vers le bas dans une direction de rotation de la came (32) à partir d'une position circonférentielle de la seconde extrémité et de sorte qu'une relation de 0,5Y < X < Y est satisfaite ; et
une relation de m ≥ n est satisfaite, où m est le nombre de coussinets hydrostatiques (100) dans une première région disposée sur un côté en amont de la surface de piston (24S) dans la direction de rotation de la came (32) et est un nombre entier non inférieur à 1, et n est le nombre de coussinets hydrostatiques (100) dans une seconde région disposée sur un côté en aval de la surface de piston (24S) dans la direction de rotation de la came et est un nombre entier non inférieur à 0.

3. Machine hydraulique selon la revendication 1, comprenant en outre :
une pluralité de coussinets hydrostatiques (100) disposés sur une surface de piston (24S) de chacun du au moins un piston (24) pour faire face à chacun du au moins un cylindre (22), dans laquelle :
la machine hydraulique est une pompe hydraulique (8) qui est configurée pour mettre sous pression l'huile de commande dans une chambre hydraulique qui est formée par chacun du au moins un cylindre et chacun du au moins un piston ;
chacun du au moins un cylindre (22) comprend une première extrémité et une seconde extrémité qui est plus à proximité de la came que la première extrémité dans la direction radiale de la machine hydraulique, et s'incline par rapport à la direction radiale de sorte qu'une position circonférentielle de la première extrémité est déplacée en aval dans une direction de rotation de la came à partir d'une position circonférentielle de la seconde extrémité et de sorte qu'une relation de 0,5Y < X < Y est satisfaite ; et
le coussinet hydrostatique (100) dans une première région disposée d'un côté en amont de la surface de piston (24S) dans la direction de rotation de la came a une capacité de charge supérieure à la capacité de charge du coussinet hydrostatique (100) dans une seconde région disposée d'un côté en aval de la surface de piston (24S) dans la direction de rotation.

4. Machine hydraulique selon la revendication 1, comprenant en outre :
au moins un coussinet hydrostatique (100) disposé sur une surface de piston (24S) de chacun du au moins un piston (24) pour faire face à chacun du au moins un cylindre (22), dans laquelle :
la machine hydraulique est une pompe hydraulique (8) qui est configurée pour mettre sous pression l'huile de commande dans une chambre hydraulique qui est formée par chacun du au moins un cylindre et chacun du au moins un piston ;
chacun du au moins un cylindre (22) comprend une première extrémité et une seconde extrémité qui est plus proche de la came (32) que la première extrémité dans la direction radiale de la machine hydraulique, et s'incline par rapport à la direction radiale de sorte qu'une position circonférentielle de la première extrémité est déplacée en aval dans une direction de rotation de la came (32) à partir d'une position circonférentielle de la seconde extrémité et de sorte qu'une relation de 0 < X ≤ 0,5Y est satisfaite ; et
une relation de m ≤ n est satisfaite, dans laquelle m est le nombre de coussinets hydrostatiques (100) dans une première région sur un côté en amont de la surface de piston (24S) dans la direction de rotation de la came (32) et est un nombre entier non inférieur à 1, et n est le nombre de coussinets hydrostatiques (100) dans une seconde région sur un côté en aval de la surface de piston (24S) dans la direction de rotation de la came et est un nombre entier non inférieur à 0.

5. Machine hydraulique selon la revendication 1, comprenant en outre :
au moins un coussinet hydrostatique (100) disposé sur une surface de piston (24S) de chacun du au moins un piston (24) pour faire face à chacun du au moins un cylindre (22), dans laquelle :
la machine hydraulique est une pompe hydraulique (8) qui est configurée pour mettre sous pression l'huile de commande dans une chambre hydraulique qui est formée par chacun du au moins un cylindre et chacun du au moins un piston ;
chacun du au moins un cylindre (22) comprend une première extrémité et une seconde extrémité qui est plus proche de la came que la première extrémité dans la direction radiale de la machine hydraulique, et s'incline par rapport à la direction radiale de sorte qu'une position circonférentielle de la première extrémité est déplacée en aval dans une direction de rotation de la came à partir d'une position circonférentielle de la seconde extrémité et de sorte qu'une relation de 0 < X ≤ 0,5Y est satisfaite ; et
le coussinet hydrostatique (100) dans une première région disposée sur un côté en amont de la surface de piston (24S) dans la direction de rotation de la came a la capacité de charge qui n'est pas supérieure à la capacité de charge du coussinet hydrostatique (100) dans une seconde région disposée sur un côté en aval de la surface de piston (24S) dans la direction de rotation.

6. Machine hydraulique selon l'une quelconque des revendications 1 à 5, comprenant en outre :
une conduite d'huile basse pression (14) dans laquelle l'huile de commande s'écoule ;
une conduite d'huile haute pression (12) dans laquelle l'huile de commande ayant une pression plus importante que dans la conduite d'huile basse pression s'écoule ;
une valve basse pression (40) disposée entre la conduite d'huile basse pression (14) et une chambre hydraulique (25) formée par chacun du au moins un cylindre et chacun du au moins un piston ;
une valve haute pression (50) disposée entre la chambre hydraulique (25) et la conduite d'huile haute pression, dans laquelle :
la valve basse pression (40) appartenant à la au moins une chambre hydraulique est configurée pour être maintenue fermée au moins pendant une partie d'une période pendant laquelle chacun du au moins un rouleau (26) se déplace d'un premier point à un deuxième point sur la surface de came (33) et pour s'ouvrir après que chacun du au moins un rouleau (26) a traversé le deuxième point, où le premier point est un point plus proche du point de sommet parmi une paire de points de référence sur la surface de came au niveau de laquelle la ligne normale (N) de la surface de came (33) rencontre l'axe central (C) du cylindre (22) entre le point de fond et le point de sommet du lobe, et le deuxième point est un point sur la surface de came (33) qui correspond à un point mort haut de chacun du au moins un piston (24) ; et
la valve haute pression (50) appartenant à la au moins une chambre hydraulique est configurée pour être maintenue ouverte au moins pendant une partie d'une période pendant laquelle chacun du au moins un rouleau (26) se déplace du premier point au deuxième point et se fermer après que chaque rouleau a traversé le deuxième point.

7. Machine hydraulique selon la revendication 6, dans laquelle :
la machine hydraulique est une pompe hydraulique (8) configurée pour mettre sous pression l'huile de commande ;
la valve basse pression (40) est une valve électromagnétique normalement ouverte qui comprend un premier siège (41), un premier élément de valve (42) qui peut être en contact avec le premier siège, une première tige (44) raccordée au premier élément de valve (42), un solénoïde (46) configuré pour générer une force magnétique pour entraîner la première tige, et un premier élément d'alimentation (48) pour alimenter le premier élément de valve (42) sur un côté opposé du premier siège (41) ;
la valve électromagnétique normalement ouverte (40) appartenant à la au moins une chambre hydraulique est configurée :
lorsque chacun du au moins un rouleau (26) est positionné à proximité d'un troisième point sur la surface de came (33) qui correspond à un point mort bas de chacun du au moins un piston (24), pour se fermer lorsque le solénoïde est alimenté ;
lorsque chacun du au moins un rouleau (26) se déplace du troisième point en passant par le premier point jusqu'au deuxième point, pour rester fermée ;
lorsque chacun du au moins un rouleau (26) atteint un quatrième point qui est disposé sur un côté opposé au deuxième point par rapport au premier point, pour s'ouvrir lorsqu'une force d'alimentation par le premier élément d'alimentation (48) dépasse la pression différentielle de l'huile de commande entre les deux côtés du premier élément de valve (42) ; et
lorsque chacun du au moins un rouleau (26) se déplace du quatrième point au troisième point, pour rester ouverte ;
la valve haute pression est une valve anti-retour comprenant un second siège (51), un second élément de valve (52) pouvant se mettre en prise avec le second siège et un second élément d'alimentation (58) pour alimenter le second élément du côté du second siège ; et
la valve anti-retour est configurée pour s'ouvrir lorsqu'une force d'alimentation par le second élément d'alimentation (58) dépasse la pression différentielle de l'huile de commande entre les deux côtés du second élément de valve (52) après que chacun du au moins un rouleau (26) se déplace à travers le troisième point, et se fermer lorsque la pression différentielle chute au-dessous de la force d'alimentation avant que chacun du au moins un rouleau (26) atteigne le quatrième point.

8. Machine hydraulique selon la revendication 6 ou 7, dans laquelle une condition d'alimentation en lubrifiant pour fournir l'huile de lubrification à une surface de piston (24S) du piston (24) afin de faire face à chacun du au moins un cylindre (22) est déterminée sur la base du changement d'un état de lubrification de la surface de piston avant et après que chacun du au moins un rouleau (26) s'est déplacé à travers le premier point.

9. Machine hydraulique selon l'une quelconque des revendications 1 à 8,
dans laquelle chacun du au moins un cylindre (22) s'incline par rapport à la direction radiale de sorte qu'une relation de 0,8 x F2 ≤ F1 ≤ 1,2 x F2 est satisfaite, dans laquelle F1 est une valeur maximale d'une force latérale le long d'une direction de rotation de la came (32) et F2 est une valeur maximale de la force latérale le long d'une direction opposée à la direction de rotation de la came (32).

10. Appareil de génération de puissance à base d'énergie renouvelable comprenant :
au moins une aube (2) pour recevoir l'énergie renouvelable ;
un moyeu (4) sur lequel la au moins une aube est montée ;
une pompe hydraulique (8) est configurée pour être entraînée par la rotation du moyeu ;
un moteur hydraulique (10) configuré pour être entraîné par l'huile sous pression générée par la pompe hydraulique (8) ; et
un générateur (16) configuré pour être entraîné par le moteur hydraulique, dans lequel :
au moins l'un parmi la pompe hydraulique (8) ou le moteur hydraulique (10) est une machine hydraulique à piston radial selon l'une quelconque des revendications 1 à 9.

11. Appareil de génération de puissance à base d'énergie renouvelable selon la revendication 10,
dans lequel l'appareil de génération de puissance à base d'énergie renouvelable est un générateur d'éolienne configuré pour générer de l'énergie électrique à partir du vent sous la forme d'énergie renouvelable.
